# EUROPEAN PATENT APPLICATION

(11) **EP 4 568 321 A1**
(43) Date of publication of application: **11.06.2025**
(21) Application number: 23851627.2
(22) Date of filing: 31.07.2023
(51) Int. Cl.: H04W 24/02

(54) **MEASUREMENT CONFIGURATION METHOD, COMMUNICATION APPARATUS, COMPUTER STORAGE MEDIUM AND COMMUNICATION SYSTEM**

(30) Priority: 09.08.2022 CN 202210951903
(71) Applicant: Huawei Technologies Co., Ltd., Shenzhen, Guangdong 518129 (CN)
(72) Inventor: ZENG, Yu, Shenzhen, Guangdong 518129 (CN); GENG, Tingting, Shenzhen, Guangdong 518129 (CN); CHEN, Jun, Shenzhen, Guangdong 518129 (CN)
(74) Representative: Maiwald GmbH
(86) International application number: PCT/CN2023/110177
(87) International publication number: WO 2024/032406

(57) **Abstract**

This application provides a measurement configuration method, a communication apparatus, a computer storage medium, and a communication system. The method is applied to an access network device and includes: receiving a measurement configuration from a core network device, where the measurement configuration is used for MDT measurement, and the measurement configuration includes measurement range information of a non-public network; and sending the measurement configuration to a terminal. In this way, the terminal performs MDT measurement on a cell in the non-public network, and feeds back an obtained measurement result to a network side in time, to optimize network performance of the non-public network, and improve communication quality of the terminal.

## Description

### TECHNICAL FIELD

This application relates to the field of communication technologies, and in particular, to a measurement configuration method, a communication apparatus, a computer storage medium, and a communication system.

### BACKGROUND

To meet a wider communication requirement, a terminal can access different types of networks and be handed over between different types of networks. For example, the terminal can access a public network and a non-public network.

For a terminal that can access a non-public network, how to use a measurement capability of the terminal to measure the non-public network, to locate a communication problem or fault in the non-public network and optimize network performance is an urgent problem to be resolved.

### SUMMARY

Embodiments of this application provide a measurement configuration method, a communication apparatus, a computer storage medium, and a communication system, to perform minimization of drive tests (minimization of drive tests, MDT) measurement configuration on a non-public network.

According to a first aspect, this application provides a measurement configuration method. The method is applied to an access network device, and the method includes: receiving a measurement configuration from a core network device, where the measurement configuration is used for MDT measurement, and the measurement configuration includes measurement range information of a non-public network; and sending the measurement configuration to a terminal.

By using the measurement configuration method provided in this application, a network side may provide a measurement configuration of the non-public network for the terminal, so that the UE performs MDT measurement on a cell in the non-public network, and feeds back an obtained measurement result to the network side in time, thereby optimizing network performance of the non-public network, and improving communication quality of the terminal.

In an implementation of the first aspect, when an access network device is a serving access network device of the terminal, the method further includes: receiving first indication information from the terminal, where the first indication information indicates whether there is a reportable measurement result for a specific network type. In another implementation, the first indication information indicates that there is a reportable measurement result for a specific network type. It can be learned that the first indication information is corresponding to the specific network type, and the access network device can quickly and accurately learn which type of network has a measurement result and instruct the terminal to report the measurement result, to perform performance optimization on a specific network targetedly, thereby improving efficiency and accuracy.

In an implementation of the first aspect, when an access network device is a serving access network device of the terminal, the method further includes: receiving second indication information from the terminal, where the second indication information indicates whether the terminal is capable of receiving an updated measurement configuration corresponding to a specific network type. In another implementation, the second indication information indicates that the terminal is capable of receiving an updated measurement configuration corresponding to a specific network type. It can be learned that the second indication information is corresponding to the specific network type, and therefore the access network device can quickly and accurately learn a specific network type for which the updated measurement configuration needs to be delivered, thereby improving network performance optimization efficiency and accuracy.

The specific network type includes one or more of the following: the non-public network, a public network, and an access network that uses an unlicensed band.

In an implementation of the first aspect, the terminal is handed over from the access network device to a target access network device, and the method further includes: The access network device sends the measurement range information to the target access network device.

For example, the access network device may send the measurement range information to the target access network device through the core network device, where the access network device and the target access network device are corresponding to different public land mobile networks (public land mobile networks, PLMNs).

In an implementation of the first aspect, the access network device is a serving access network device of the terminal, and the method further includes: receiving a measurement result for the non-public network; and sending the measurement result to an access network device in the non-public network. In another implementation, if the access network device is an access network device in the non-public network, even if the MDT measurement performed by the terminal is not targeted for a cell managed by the access network device, the access network device may perform performance optimization on the non-public network based on the measurement result, and does not need to forward a measurement report.

According to a second aspect, this application provides a measurement configuration method. The method is applied to a terminal, and the method includes: receiving measurement configurations from at least one access network device, where the measurement configurations are used for MDT measurement, and the measurement configurations include measurement range information of a first non-public network; and performing MDT measurement on one or more cells in the first non-public network based on the measurement configurations.

In an implementation of the second aspect, the measurement configurations include a first measurement configuration and a second measurement configuration, the first measurement configuration includes the measurement range information of the first non-public network, and the second measurement configuration includes a measurement configuration of a network different from the first non-public network. The network different from the first non-public network may include one or more of the following: a public network, a measurement configuration of an unlicensed band, and a second non-public network.

In an implementation of the second aspect, the method further includes: recording the first measurement configuration and the second measurement configuration in a same log or different logs.

In an implementation of the second aspect, the first measurement configuration includes first measurement duration, the second measurement configuration includes second measurement duration, and the method further includes: when a storage time of the first measurement configuration exceeds the first measurement duration, deleting the first measurement configuration; and/or when a storage time of the second measurement configuration exceeds the second measurement duration, deleting the second measurement configuration. The terminal sets, for each measurement configuration, a storage time that matches measurement duration, to properly allocate storage resources.

In an implementation of the second aspect, when the first measurement configuration and the second measurement configuration are recorded in a same log, the method further includes: when the storage time of the first measurement configuration or the second measurement configuration exceeds preset duration, deleting the first measurement configuration and the second measurement configuration. The terminal sets a uniform storage time for measurement configurations in one log, so that storage resources can be released in time.

In an implementation of the second aspect, the method further includes: when receiving time of the second measurement configuration is later than that of the first measurement configuration, deleting the first measurement configuration stored in the first log, and storing the second measurement configuration in the first log. In this implementation, a newly received measurement configuration overwrites a previously received measurement configuration, to reduce occupied storage resources.

In an implementation of the second aspect, the method further includes: recording, in a same measurement report or different measurement reports, a first measurement result obtained based on the first measurement configuration and a second measurement result obtained based on the second measurement configuration.

In an implementation of the second aspect, the method further includes: sending first indication information to a serving access network device of the terminal, where the first indication information indicates whether there is a reportable measurement result for a specific network type.

In an implementation of the second aspect, the method further includes: sending second indication information to a serving access network device of the terminal, where the second indication information indicates whether the terminal is capable of receiving an updated measurement configuration corresponding to a specific network type.

The specific network type includes one or more of the following: a non-public network, a public network, and an access network that uses the unlicensed band.

In an implementation of the second aspect, the method further includes: determining whether the serving access network device of the terminal is an access network device in the first non-public network; and when determining that the serving access network device is the access network device in the non-public network, sending the measurement result for the non-public network to the serving access network device.

In an implementation of the second aspect, the method further includes: determining, based on network identification information corresponding to the measurement result for the non-public network, whether to send the measurement result for the non-public network to the serving access network device of the terminal. For example, when a part or all of registered-network identification information of the terminal in a serving cell belongs to the network identification information corresponding to the measurement result, it is determined to send the measurement result to the serving access network device. The serving cell is managed by the serving access network device.

According to a third aspect, this application provides a measurement configuration method. The method is applied to a core network device and includes: determining a measurement configuration used for MDT, where the measurement configuration includes measurement range information of a non-public network; and sending the measurement configuration to an access network device.

In an implementation of the third aspect, when a terminal is handed over from the access network device to a target access network device, the method further includes: receiving the measurement range information from the access network device, and sending the measurement range information to the target access network device.

In an implementation of the third aspect, the core network device includes one or more core network elements.

In an implementation of the first aspect, the second aspect, or the third aspect, the MDT measurement includes signaling based MDT measurement or management based MDT measurement.

In an implementation of the first aspect, the second aspect, or the third aspect, the measurement range information includes identification information of the non-public network, or includes identification information of the non-public network and identification information of a PLMN corresponding to the non-public network.

For example, when the non-public network is a standalone non-public network (standalone non-public network, SNPN), the identification information of the non-public network includes a network identifier (network identifier, NID) of the SNPN.

For example, when the non-public network includes a public network integrated non-public network (public network integrated non-public network, PNI-NPN), the identification information of the non-public network includes identification information of a closed access group (closed access group, CAG) to which a to-be-measured PNI-NPN cell belongs.

In an implementation of the first aspect, the second aspect, or the third aspect, the measurement range information further includes neighboring cell measurement indication information, for indicating to measure a neighboring cell of a to-be-measured cell in the non-public network, so that a comprehensive and accurate measurement result can be obtained.

In an implementation of the first aspect, the second aspect, or the third aspect, the measurement configuration further includes a measurement configuration of an unlicensed band, and the measurement configuration of the unlicensed band is used by the terminal to perform MDT measurement on a cell in an access network that uses the unlicensed band. The measurement configuration of the unlicensed band includes one or more of the following: a frequency channel number of the unlicensed band, a channel bandwidth of the unlicensed band, or a to-be-measured item for the unlicensed band, where the to-be-measured item includes one or more of the following: a listen before talk (listen before talk, LBT) success rate for uplink data, average LBT duration for uplink data, average energy in the unlicensed band, or a to-be-measured LBT success rate for a random access channel.

For example, the MDT measurement includes periodic MDT measurement and time-triggered MDT measurement. When the MDT measurement is event-triggered MDT measurement, the measurement configuration of the unlicensed band further includes a measurement event, and the measurement event includes: the LBT success rate for the random access channel is lower than a first threshold, or the average energy measured in the unlicensed band is higher than a second threshold.

A network side provides the measurement configuration of the unlicensed band for the terminal, so that the terminal can perform MDT measurement on the cell in the unlicensed band. In this way, the network side can perform, based on a measurement result fed back by the terminal, performance optimization on the access network that uses the unlicensed band, to improve communication quality of the terminal in the unlicensed band, obtain a more comprehensive MDT measurement result, and improve network performance optimization effect.

According to a fourth aspect, this application provides a measurement configuration method. The method is applied to a terminal and includes: receiving measurement configurations from at least one access network device, where the measurement configurations are used for MDT measurement, and the measurement configurations include measurement configurations respectively corresponding to at least two networks; and performing MDT measurement on a cell in at least one of the networks based on the measurement configurations.

In an implementation of the fourth aspect, the method further includes: recording, in a same log or different logs, the measurement configurations respectively corresponding to the at least two networks.

In an implementation of the fourth aspect, a measurement configuration corresponding to each network includes measurement duration, and the method further includes: when a storage time of a measurement configuration corresponding to any network exceeds the measurement duration, deleting the measurement configuration corresponding to the network. The terminal sets, for each measurement configuration, a storage time that matches measurement duration, to properly allocate storage resources.

In an implementation of the fourth aspect, when the measurement configurations respectively corresponding to the at least two networks are recorded in a same log, the method further includes: when a storage time of any measurement configuration in the log exceeds preset duration, deleting all measurement configurations from the log. The terminal sets a uniform storage time for measurement configurations in one log, so that storage resources can be released in time.

In an implementation of the fourth aspect, the measurement configurations respectively corresponding to the at least two networks include a first measurement configuration corresponding to a first network and a second measurement configuration corresponding to a second network, and the method further includes: when receiving time of the second measurement configuration is later than that of the first measurement configuration, deleting the first measurement configuration stored in the first log, and storing the second measurement configuration in the first log. In this implementation, a newly received measurement configuration overwrites a previously received measurement configuration, to reduce occupied storage resources.

In an implementation of the fourth aspect, the method further includes: recording, in a same measurement report or different measurement reports, measurement results respectively obtained based on the measurement configurations corresponding to the at least two networks.

In an implementation of the fourth aspect, the method further includes: sending first indication information to a serving access network device of the terminal, where the first indication information indicates whether there is a reportable measurement result for a specific network type.

In an implementation of the fourth aspect, the method further includes: sending second indication information to a serving access network device of the terminal, where the second indication information indicates whether the terminal is capable of receiving an updated measurement configuration corresponding to a specific network type.

The specific network type includes some or all of the at least two networks.

According to a fifth aspect, this application provides a measurement configuration method. The method is applied to an access network device and includes: receiving measurement configurations from at least one core network, and sending the measurement configurations to a terminal, where the measurement configurations are used for MDT measurement, and the measurement configurations include measurement configurations respectively corresponding to at least two networks.

In an implementation of the fifth aspect, when the access network device is a serving device of the terminal, the method further includes: receiving first indication information from the terminal, where the first indication information indicates whether there is a reportable measurement result for a specific network type.

In an implementation of the fifth aspect, when the access network device is a serving device of the terminal, the method further includes: receiving second indication information from the terminal, where the second indication information indicates whether the terminal is capable of receiving an updated measurement configuration corresponding to a specific network type.

In an implementation of the fourth aspect or the fifth aspect, the network includes a non-public network, a public network, or an access network that uses an unlicensed band. Different types of non-public networks, for example, an SNPN and a PNI-NPN, are considered as different networks. For public networks, access networks using different access technologies, for example, a new radio (new radio, NR) access network and a long term evolution (long term evolution, LTE) access network, are considered as different networks.

By using the measurement configuration methods provided in the fourth aspect and the fifth aspect, the UE may obtain MDT measurement configurations corresponding to a plurality of network types, to perform comprehensive and accurate MDT measurement, and improve network performance optimization effect.

According to a sixth aspect, this application provides a measurement configuration method. The method is applied to an access network device, and the method includes: receiving a measurement configuration from a core network device, where the measurement configuration is used for MDT measurement, and the measurement configuration includes a measurement configuration of an unlicensed band; and sending the measurement configuration to a terminal. The measurement configuration of the unlicensed band is used by the terminal to perform MDT measurement on a cell in an access network that uses the unlicensed band.

According to a seventh aspect, this application provides a measurement configuration method. The method is applied to a terminal, and the method includes: receiving a measurement configuration from an access network device, where the measurement configuration includes a measurement configuration of an unlicensed band; and performing, based on the measurement configuration, MDT measurement on a cell in an access network that uses the unlicensed band.

According to an eighth aspect, this application provides a measurement configuration method. The method is applied to a core network device, and the method includes: determining a measurement configuration used for MDT, where the measurement configuration includes a measurement configuration of an unlicensed band; and sending the measurement configuration to an access network device.

In any implementation of the sixth aspect, the seventh aspect, or the eighth aspect, the measurement configuration of the unlicensed band includes one or more of the following: a frequency channel number of the unlicensed band, a channel bandwidth of the unlicensed band, or a to-be-measured item for the unlicensed band, where the to-be-measured item includes one or more of the following: an LBT success rate for uplink data, average LBT duration for uplink data, average energy in the unlicensed band, or a to-be-measured LBT success rate for a random access channel.

In any implementation of the sixth aspect, the seventh aspect, or the eighth aspect, when the MDT measurement is event-triggered MDT measurement, the measurement configuration of the unlicensed band further includes a measurement event, and the measurement event includes: the LBT success rate for the random access channel is lower than a first threshold, or the average energy measured in the unlicensed band is higher than a second threshold.

A network side provides the measurement configuration of the unlicensed band for the terminal, so that the terminal can perform MDT measurement on the cell in the unlicensed band. In this way, the network side can perform, based on a measurement result fed back by the terminal, performance optimization on the access network that uses the unlicensed band, to improve communication quality of the terminal in the unlicensed band.

In any implementation of the sixth aspect, the seventh aspect, or the eighth aspect, in addition to the measurement configuration of the unlicensed band, the measurement configuration further includes a measurement configuration of one or more other networks, for example, includes a measurement configuration of a non-public network and/or a measurement configuration of a public network. In this way, the terminal can perform more comprehensive MDT measurement, and improve performance optimization effect for each network.

According to a ninth aspect, this application provides an information recording method, including: A terminal records a first report related to a first network; the terminal accesses a second cell in a second network; and the terminal determines whether to indicate that the first report exists to an access network device to which the second cell belongs.

In an implementation of the ninth aspect, the first network or the second network includes any one of the following: a public network, a non-public network, and an access network that uses an unlicensed band. For example, the non-public network includes an SNPN or a PNI-NPN. The first network and the second network may be identical or different.

In an implementation of the ninth aspect, the first report includes at least one of the following: a radio link failure report (radio link failure report, RLF report), a successful handover report (successful handover report, SHR), a random access report (random access report, RA report), a connection establishment failure report (connection establishment failure report, CEF report), a secondary-cell change failure report, a secondary-cell change success report, and an MDT report. The first report may further include any other report used for network performance optimization.

In an implementation of the ninth aspect, the method further includes: When the terminal determines to indicate that the first report exists to the access network device to which the second cell belongs, the terminal sends indication information indicating that the first report exists to the access network device.

In an implementation of the ninth aspect, the method further includes: The terminal records network identification information corresponding to the first report.

In an implementation of the ninth aspect, the network identification information corresponding to the first report includes a part or all of identification information of a subscribed network of the terminal. The identification information includes a PLMN identifier, or includes a PLMN identifier and a network identifier.

For example, when the first network is an SNPN, the network identification information corresponding to the first report includes a PLMN identifier corresponding to the SNPN, or includes a PLMN identifier and a NID that are corresponding to the SNPN. Because SNPNs may not communicate with each other, or an SNPN and a public network may not communicate with each other, the terminal may record only identification information of the SNPN for which the first report is targeted. This reduces occupied storage resources of the terminal, and improves efficiency of performing network performance optimization on the SNPN.

When the first network is a PNI-NPN, the network identifier corresponding to the first report includes a PLMN identifier corresponding to the PNI-NPN, or includes a PLMN identifier corresponding to the PNI-NPN and an identifier of another PLMN to which the terminal subscribes, or includes a PLMN identifier and CAG identification information that are corresponding to the PNI-NPN, or includes a PLMN identifier corresponding to the PNI-NPN, an identifier of another PLMN to which the terminal subscribes, CAG identification information of the PNI-NPN, and CAG identification information of another PNI-NPN supported by a PLMN corresponding to the PNI-NPN. Because the PNI-NPN may be a slice of a public network, in addition to recording identification information of the PNI-NPN for which the first report is targeted, the terminal may further record identification information of another public network and another PNI-NPN to which the terminal subscribes, so that a large quantity of access network devices can obtain the first report. This is conducive to improving network performance optimization effect.

In an implementation of the ninth aspect, that the terminal determines whether to indicate that the first report exists to an access network device to which the second cell belongs includes: The terminal determines, based on network identification information broadcast in the second cell and the network identification information corresponding to the first report, whether to indicate that the first report exists to the access network device to which the second cell belongs; and for example, if a part or all of the network identification information broadcast in the second cell belongs to the network identification information corresponding to the first report, the terminal determines to send the indication information indicating that the first report exists to the access network device to which the second cell belongs.

In an implementation of the ninth aspect, the method further includes: The terminal receives feedback information of the indication information from the access network device, and the terminal sends the first report to the access network device.

By using the information recording method in the ninth aspect, the terminal can accurately and quickly determine, based on the recorded network identification information of the first report, whether the first report can be sent to the serving access network device of the terminal, thereby improving efficiency of performing network performance optimization by using the first report.

According to a tenth aspect, this application further provides a communication apparatus, including a unit, a module, or a means (means) configured to perform the steps in the first aspect, the fifth aspect, or the sixth aspect. The communication apparatus may be an access network device, or an apparatus used for an access network device, for example, a chip. The access network device may be a base station, or a device that has some functions of a base station.

According to an eleventh aspect, this application further provides a communication apparatus, including a unit, a module, or a means (means) configured to perform the steps in the second aspect, the fourth aspect, the seventh aspect, or the ninth aspect. The communication apparatus may be a terminal, or an apparatus used for a terminal, for example, a chip.

According to a twelfth aspect, this application further provides a communication apparatus, including a unit, a module, or a means (means) configured to perform the steps in the third aspect or the eighth aspect. The communication apparatus may be a core network device, or an apparatus used for a core network device, for example, a chip.

According to a thirteenth aspect, this application further provides a communication apparatus, including a processor and an interface circuit. The processor is configured to: communicate with another apparatus through the interface circuit, and perform the methods provided in the first aspect to the ninth aspect. There are one or more processors.

According to a fourteenth aspect, this application further provides a communication apparatus, including a processor, configured to invoke a program stored in a memory, to perform the methods provided in the first aspect to the ninth aspect. The memory may be located inside or outside the apparatus. In addition, there may be one or more processors.

According to a fifteenth aspect, this application further provides a computer program product. When the program is invoked by a processor, the method according to any one of the foregoing aspects is performed.

In addition, a computer-readable storage medium is provided, and includes the foregoing program.

According to a sixteenth aspect, this application provides a communication system, including at least one access network device that includes a first access network device and at least one core network device that includes a first core network device. The first access network device is configured to perform the method provided in the first aspect, the fifth aspect, or the sixth aspect, and the first core network device is configured to perform the method provided in the third aspect or the eighth aspect.

In an implementation, the communication system further includes a terminal. The terminal is configured to perform the method provided in the second aspect, the fourth aspect, the sixth aspect, or the ninth aspect.

In an implementation, the communication system includes two or more access network devices, and the two or more access network devices use different radio access technologies. For example, the two or more access network devices are connected to a same core network or different core networks.

In an implementation, the communication system includes two or more core network devices, and the two or more core network devices belong to different core networks.

### BRIEF DESCRIPTION OF DRAWINGS

FIG. 1 is a diagram of a communication system 100 according to an embodiment of this application;
FIG. 2 is a flowchart of a measurement configuration method according to an embodiment of this application;
FIG. 3 is a flowchart of a measurement configuration method according to an embodiment of this application;
FIG. 4 is a signaling flowchart of a measurement configuration method according to an embodiment of this application;
FIG. 5 is a signaling flowchart of a measurement configuration method according to an embodiment of this application;
FIG. 6 is a flowchart of an information recording method according to an embodiment of this application;
FIG. 7 is a diagram of a communication apparatus 700 according to an embodiment of this application;
FIG. 8 is a diagram of an access network device 800 according to an embodiment of this application; and
FIG. 9 is a diagram of a terminal 900 according to an embodiment of this application.

### DESCRIPTION OF EMBODIMENTS

Technologies described in embodiments of this application can be applied to a plurality of communication systems, for example, a long term evolution (long term evolution, LTE) system, an enhanced long term evolution (enhanced long term evolution, eLTE) system, a 5th generation (5th generation, 5G) mobile communication system like a new radio (new radio, NR) system, a 6th generation (6th generation, 6G NG) communication system, and other future communication systems. This is not limited in this application.

In this application, a terminal may be one of various devices that provide voice and/or data connectivity for a user, and may communicate with one or more core networks through a radio access network (Radio Access Network, RAN). The terminal may also be referred to as a terminal device, a user equipment (user equipment, UE), a mobile station, a mobile terminal, or the like. The terminal can be widely used in various scenarios, for example, device -to-device (device-to-device, D2D), vehicle-to-everything (vehicle-to-everything, V2X) communication, machine type communication (machine type communication, MTC), an internet of things (internet of things, IOT), virtual reality, augmented reality, industrial control, self-driving, telemedicine, a smart grid, smart furniture, a smart office, smart wear, intelligent transportation, and a smart city. The terminal may be a mobile phone, a tablet computer, a computer having wireless sending and receiving functions, a wearable device, an aerospace device, or the like. In embodiments of this application, a chip used in the foregoing device may also be referred to as a terminal. In this application, an example in which UE is used as the terminal is used for description.

In this application, an access network device may be one of various base stations, for example, an evolved NodeB (evolved NodeB, eNodeB), a transmission reception point (transmission reception point, TRP), a next generation base station (next generation NodeB, gNB) in a 5G mobile communication system, or a base station in another future communication system. Moreover, when the eNB is connected to a 5G core network (5G core network, 5GC), the LTE eNB may also be referred to as an eLTE eNB, and the eLTE eNB may also be considered as a base station device in an NR system. The access network device may be alternatively an access point (access point, AP), a wireless relay node, a wireless backhaul node, or the like in a wireless fidelity (wireless fidelity, Wi-Fi) system. The access network device may be alternatively a module or unit that completes some functions of a base station, for example, may be a central unit (central unit, CU) or a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete functions of some or all of physical layers. For specific descriptions of the foregoing protocol layers, refer to related technical specifications of the 3rd Generation Partnership Project (3rd Generation Partnership Project, 3GPP). The CU and the DU may jointly complete the functions of the base station. In addition, functions of the CU may be implemented by a plurality of entities. For example, the functions of the CU may be further divided. For example, functions of a control plane (control plane, CP) and a user plane (user plane, UP) of the CU are separated, to form a CU-control plane (CU-CP) and a CU-user plane (CU-UP). For example, the CU-CP and the CU-UP may be implemented by different functional entities, and are connected through an E1 interface. The CU-CP and the CU-UP may be coupled to the DU. The base station in this application may be a macro base station, or may be a micro base station, an indoor base station, or the like. A specific technology and a specific device form that are used by the network device are not limited in embodiments of this application. In this application, an example in which a base station is used as the access network device is used for description.

A core network device described in this application is a device located in a core network, and may include one or more core network elements. A 5G core network is used as an example. The 5G core network includes an access and mobility management function (access and mobility management function, AMF) network element responsible for mobility management, access management, and other services, a session management function (session management function, SMF) network element responsible for session management, a user plane function (user plane function, UPF) network element responsible for data packet routing and forwarding and quality of service (Quality of Service, QoS) control of a user plane, a policy control function (policy control function, PCF) network element, and the like. These network elements may also be referred to as entities or functional entities. The core network elements may work independently, or may be combined to implement some control functions together. For example, the AMF, the SMF, and the PCF may be combined to serve as a core network device.

A public network described in embodiments of this application is a communication network used for public purposes, for example, a communication network related to a public land mobile network (public land mobile network, PLMN). The PLMN may be used to uniquely identify an operator in a specific area, and the PLMN may be represented by a mobile country code (mobile country code, MCC) and a mobile network code (mobile network code, MNC). An operator may deploy access networks with a plurality of standards or using different radio access technologies (radio access technologies, RATs), for example, deploy an NR access network and an LTE access network. Communication systems with different standards deployed by a same operator are corresponding to PLMN identifiers that are in a same format but have different values. A UE can register with a PLMN by using a PLMN selection procedure, to obtain a communication service provided by the PLMN.

A non-public network (non-public network, NPN) described in embodiments of this application is a communication network used for non-public purposes. A RAT used by the NPN is not limited in this application. For example, NR or LTE is used in an access network part. The NPN may be deployed in different manners as follows: (1) An NPN that is completely independently deployed may be referred to as a standalone non-public network (standalone non-public network, SNPN). The SNPN uses a dedicated network spectrum, and has an independent core network and a base station that is dedicated to the SNPN. A cell in the SNPN may be referred to as an SNPN-only cell (SNPN-only cell). The SNPN may be considered as a regional PLMN. An SNPN and a PLMN deployed by a same operator may use a same PLMN identifier, and the SNPN may additionally use a network identifier, for indicating that the SNPN is a non-public network deployed by the operator, to distinguish the SNPN from a public network deployed by the operator. (2) An NPN serving as a slice of a public network may be referred to as public network integrated non-public network (public network integrated non-public network, PNI-NPN). The PNI-NPN uses an operator' spectrum, and access network resources and core network resources of a public network, for example, uses resources of an NR cell to form a PNI-NPN cell, and uses resources of the 5G core network to form a core network of the PNI-NPN. From a perspective of a device, a base station in the PNI-NPN may reuse a gNB, and a control plane network element in the core network of the PNI-NPN may reuse the access and mobility management function (access and mobility management function, AMF) network element in the 5G core network. From a perspective of a network identifier, the PNI-NPN cell and the NR cell have a same identity, and the PNI-NPN cell and the NR cell are corresponding to a same PLMN identifier.

In addition to supporting public networks such as the PLMN, the UE can also support non-public networks such as the SNPN and/or the PNI-NPN. In other words, the UE may have a capability of accessing public networks and non-public networks. The base station may send various configurations of non-public networks including identification information of the non-public networks to the UE, so that the UE can establish connections to and communicate with the non-public networks. For example, the SNPN may be identified by a PLMN identifier (PLMN identifier) and a network identifier (network identifier, NID) in a system information block 1 (system information block 1, SIB1) sent by the base station to the UE. After receiving the SIB1, if the SNPN-capable UE works in an SNPN access mode, the UE executes an SNPN selection procedure (only selects and registers with the SNPN network); or if the UE does not work in an SNPN mode, the UE executes a normal PLMN selection procedure. For another example, the PNI-NPN may be identified by a PLMN ID and a closed access group identifier (closed access group identifier, CAG ID) in the SIB1. A closed access group (closed access group, CAG) includes a group of identities of PNI-NPN cells available to the UE. A cell in a public network may be corresponding to a plurality of CAGs. Identification information of these CAGs may form a CAG list (CAG list). One CAG list may be corresponding to one PLMN, and one CAG list may include one or more CAG IDs. The UE may select a PNI-NPN cell from the CAG to access the PNI-NPN. Moreover, CAG selection is added to the PLMN selection procedure performed by the UE.

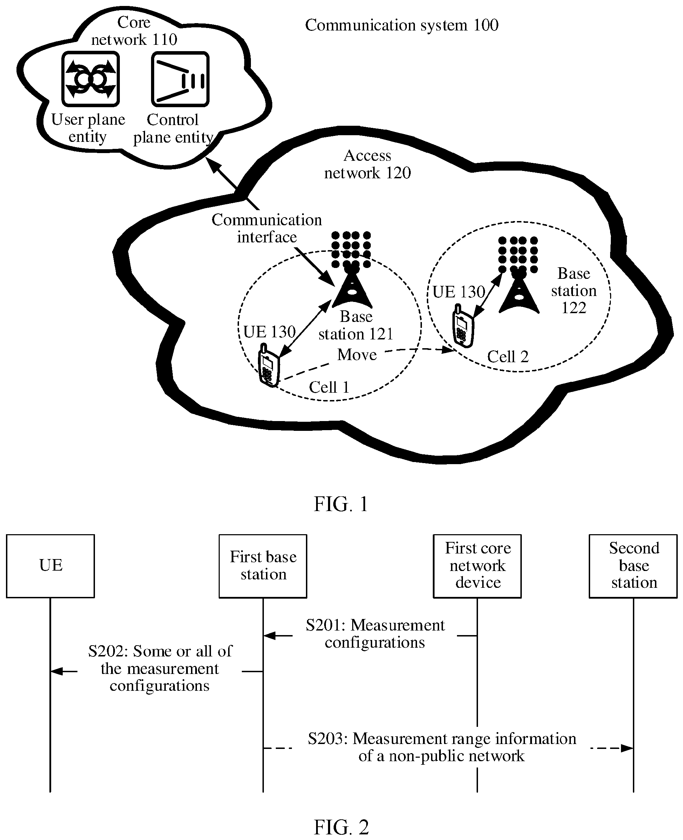

FIG. 1 is a diagram of a communication system 100 according to an embodiment of this application.

As shown in FIG. 1, the communication system 100 may include a core network 110, an access network 120, and a UE 130.

The core network 110 includes one or more entities having different functions, for example, a control plane entity responsible for processing and transmitting control plane information, and a user plane entity responsible for processing and transmitting user plane data. The access network 120 includes at least one access network device, and each access network device manages one or more cells. In FIG. 1, a base station 121 and a base station 122 are used as an example. A communication interface that exists between the core network 110 and the base station 121 is used for data or information transmission. The base station 122 may be connected to the core network 110, or may be connected to another core network. This is not shown in the figure.

The UE 130 may establish a connection to the base station 121 in a cell 1 managed by the base station 121, so that the base station 121 provides a communication service for the terminal. In addition, cell handover may occur in a movement process of the UE. For example, in a process in which the UE moves to a cell 2, the UE may be handed over from the cell 1 to the cell 2 managed by the base station 122, disconnect from the cell 1, access the cell 2, and obtain a communication service of the base station 2 by using the cell 2. In a process in which the UE is handed over from the cell 1 to the cell 2, the cell 1 may be referred to as a source cell of the UE (referred to as a source cell for short), the cell 2 may be referred to as a target cell of the UE (referred to as a target cell for short), the base station 121 may be referred to as a source base station of the UE (referred to as a source base station for short), and the base station 122 may be referred to as a target base station of the UE (referred to as a target base station for short).

The communication system 100 may be a communication system used for a non-public network. Specifically, the core network 110 is a core network dedicated to the non-public network, or a core network formed by using core network resources of a public network. Correspondingly, the base station 121 is a base station dedicated to the non-public network, or a base station shared by the non-public network and the public network. The cell 1 may be a cell in the non-public network. If the base station 122 is also connected to the core network 110, the base station 122 is a base station used for the non-public network, and the cell 2 is a cell in the non-public network. If the base station 122 is connected to a core network of the public network, the base station 122 is a base station used for the public network, and the cell 1 is a cell in the public network. Types of cells between which the UE is handed over are not limited in this application. The UE may be handed over between cells in the non-public network, or may be handed over between a cell in the non-public network and a cell in the public network.

To detect and mitigate a problem and a fault in a wireless network in time, a minimization of drive tests (minimization of drive tests, MDT) technology may be used. An operator uses a terminal of a subscribed user to perform measurement reporting, to partially replace conventional drive test work, so as to automatically collect measurement data on a terminal side.

A network side may send an MDT configuration to the UE. After obtaining the MDT configuration, the UE may perform MDT measurement on a corresponding cell, and return an MDT measurement result to the network side. FIG. 1 is used as an example. The control plane entity in the core network 110 sends an MDT configuration for the UE 130 to the base station 121 by using the communication interface between the control plane entity and the base station 121, and the base station 121 sends the MDT configuration to the UE 130. Then, the UE performs MDT measurement on a serving cell (for example, the cell 1) and/or a neighboring cell based on the MDT configuration, obtains an MDT measurement report, and sends the MDT measurement report to the base station 121. The base station 121 may optimize a network parameter based on the MDT measurement report. A quantity and a format of the MDT measurement configuration delivered by the core network are not limited in this application. The format of the MDT measurement configuration delivered by the core network is corresponding to a type of the core network. For example, a 5G core network sends an MDT measurement configuration in an NR format to a gNB, or a 4G core network sends an MDT measurement configuration in an LTE format to an eNB. Alternatively, the core network may deliver MDT measurement configurations in a plurality of formats. For example, a 5G core network sends an MDT measurement configuration in an NR format and an MDT measurement configuration in an LTE format to a gNB. The format of the MDT measurement configuration includes designs such as a name of an information element including the MDT measurement configuration, a location of the information element in a message, and a value of the information element.

The MDT measurement may also be referred to as wireless-side measurement, and includes logged MDT (logged MDT) measurement and immediate MDT (immediate MDT) measurement. The logged MDT measurement is MDT measurement performed by the UE in a radio resource control (radio resource control, RRC) idle (idle) state or an RRC inactive (inactive) state. The logged MDT measurement is used for measuring strength of a received signal. In this application, the logged MDT measurement may be referred to as MDT measurement performed by the UE in an RRC non-connected state. Currently, if the network side configures, through configuration, the UE to perform MDT measurement in an idle state or an inactive state, when the UE enters a connected state, the UE performs MDT measurement not based on an MDT measurement configuration in the idle state or the inactive state any more. If the network side further expects to obtain the MDT measurement result, the network side may configure measurement information of MDT measurement performed by the UE in the connected state.

The immediate MDT measurement is MDT measurement performed by the UE in an RRC connected state. The immediate MDT measurement is used for measuring at least one of the following: a data volume, a throughput rate, a packet transmission delay, a packet loss rate, or a processing delay of the UE. In this application, the immediate MDT measurement is referred to as MDT measurement performed by the UE in the RRC connected state. In this application, the RRC idle state or the RRC inactive state is referred to as a non-connected state for short, and the RRC connected state is referred to as a connected state for short.

The MDT measurement may also be classified into signaling based MDT (signaling based MDT) measurement and management based MDT (management based MDT) measurement. The signaling based MDT measurement is MDT measurement targeted for a specific UE. In this case, the base station receives, from the core network, signaling or a message for performing MDT measurement for the specific UE. The management based MDT measurement is MDT measurement not targeted for a specific UE. The base station receives signaling for performing MDT from an operations, administration, and maintenance (operations, administration, and maintenance, OAM) entity or an element management (element management, EM) entity. The signaling is not targeted for a specific UE, but is targeted for all UEs in the cell managed by the base station. The base station may select some UEs to which MDT configurations are sent.

Based on different measurement ranges, the MDT measurement may also be classified into the following four types: tracking area based MDT (tracking area based MDT, TA based MDT), PLMN based MDT (PLMN based MDT), cell based MDT (cell based MDT), and tracking area identity (tracking area identity, TAI) based MDT (TAI based MDT). MDT configurations corresponding to different measurement ranges are different. The UE performs MDT measurement on one or more cells in different measurement ranges. The TAI based MDT may be considered as MDT measurement performed based on a tracking area range, that is, a measurement range of the TAI based MDT is a tracking area. However, a PLMN in which a TAI based MDT-related measurement configuration is sent may be different from a PLMN to which the tracking area to be measured belongs.

In addition, based on measurement types, the MDT measurement may be classified into signal level measurement, quality of service (quality of service, QoS) measurement, accessibility measurement, and the like. Signal level measurement: The UE measures a signal level of a wireless signal, and sends a measurement result to an access network device, for example, the base station. QoS measurement: The QoS measurement may have a plurality of parameters, and includes but is not limited to measurement on service traffic, a service throughput, a service delay, an uplink processing delay of the UE, an air interface delay, or the like. If the measured parameter is at least one of the following: the service traffic, the service throughput, or the service delay, the base station may perform QoS measurement; if the uplink processing delay of the UE is measured, the UE may perform QoS measurement; or if the air interface delay is measured, the base station and the UE may jointly perform QoS measurement. Accessibility measurement: The UE records information about an RRC connection establishment failure, and sends the information to an access network device, for example, the base station.

This application provides a measurement configuration method. The method may be used to configure MDT measurement of a non-public network and expand application scenarios of the MDT measurement, to detect and mitigate a communication problem and fault in the non-public network in time.

It can be understood that the method provided in this application may be performed by a core network device, an access network device, or a terminal, or may be performed by an apparatus used for a core network device, an access network device, or a terminal, for example, a chip. In this application, that the measurement configuration method provided in this application is performed by the core network device, the access network device, and the terminal is described. In addition, the following uses an example for description in which the access network device is a base station and the terminal is UE.

FIG. 2 is a flowchart of a measurement configuration method according to this application. As shown in FIG. 2, the method includes the following steps.

S201: A first base station receives measurement configurations from a first core network device, where the measurement configurations are used for MDT measurement.

A type of a core network to which the first core network device belongs is not limited in this application. For example, the core network may be a 5G core network, may be a 4G core network, or may be a core network dedicated to a non-public network. For example, if the core network is a 5G core network, the first core network device may be an AMF network element. If the core network is a 4G core network, the first core network device may be a mobility management entity (mobility management entity, MME). Correspondingly, the first base station may be a gNB or an eNB connected to the 5G core network, an eNB connected to the 4G core network, or a base station connected to the core network dedicated to the non-public network.

In an implementation, if the first base station uses a CU-DU architecture, and a CU includes a CU-CP and a CU-UP, the CU-CP may receive the measurement configurations sent by the first core network device, and the CU-CP generates an air interface message including the measurement configurations. In an implementation, if the CU-CP is divided into a CU-CP1 and a CU-CP2, where the CU-CP1 includes various radio resource management functions, and the CU-CP2 includes an RRC function and a PDCP-C function (that is, a basic function of control plane signaling at a PDCP layer), the CU-CP2 may receive the measurement configurations and generate an air interface message including the measurement configurations.

In this application, the measurement configurations are configurations used for MDT measurement. For descriptions of the MDT measurement, refer to the foregoing descriptions. In addition, "measurement" in this application is short for MDT measurement, and a "measurement result" is a measurement result obtained through MDT measurement.

In an implementation, the measurement configurations include measurement range information of the non-public network. The measurement range information may indicate the non-public network on which UE can perform the MDT measurement, and further the measurement range information may indicate a to-be-measured cell in the non-public network on which the MDT measurement can be performed. For example, the measurement configurations received by the first base station include a measurement configuration of the non-public network, which is used by the UE to perform MDT measurement on a cell in the non-public network. The measurement configuration of the non-public network includes the measurement range information.

For example, the non-public network may be an SNPN or a PNI-NPN, or may be a network used for non-public purposes deployed in another manner. This is not limited. In this application, that the SNPN and the PNI-NPN are used as examples of non-public networks is used for description.

For example, the measurement configurations include measurement range information of a plurality of non-public networks, and types of the non-public networks may be identical or different. For example, a measurement configuration #1 received by the first base station includes measurement range information of a PNI-NPN#1 and a PNI-NPN#2, and the PNI-NPN#1 and the PNI-NPN#2 have different network identifiers. In an example, the measurement configurations received by the first base station may include measurement range information of one non-public network. For example, the measurement configuration #1 received by the first base station includes measurement range information of the SNPN, or a measurement configuration #2 received by the first base station includes measurement range information of the PNI-NPN.

In an implementation, the measurement configurations may include measurement configurations corresponding to a plurality of networks, where the plurality of networks include at least one non-public network. A measurement configuration corresponding to each network includes configuration information used for performing MDT measurement on a cell in the network. For example, some or all of the plurality of networks may belong to different network types. For example, different types of non-public networks such as the SNPN and the PNI-NPN, access networks using unlicensed bands, and access networks using different RATs such as LTE and NR access networks may all be considered as different network types. For another example, network types may be classified into a non-public network, a public network, or an access network that uses an unlicensed band.

For example, the measurement configurations include a first measurement configuration and a second measurement configuration, the first measurement configuration is a measurement configuration of a first non-public network, the first measurement configuration includes measurement range information of the first non-public network, and the second measurement configuration includes a measurement configuration of a network different from the first non-public network. The network different from the first non-public network includes one or more of the following: a public network, a measurement configuration of an unlicensed band, and a second non-public network. For example, the measurement configurations include a first measurement configuration of the PNI-NPN and a second measurement configuration of the unlicensed band. It can be understood that a quantity of measurement configurations that are corresponding to different networks and that are included in the measurement configurations received by the first base station is not limited in this application. For example, in addition to the first measurement configuration and the second measurement configuration, the measurement configurations may further include one or more other measurement configurations, and a network corresponding to the other measurement configuration is different from the network corresponding to the first measurement configuration or the second measurement configuration.

It can be understood that, if the first core network device is located in the core network dedicated to the non-public network, for example, located in a core network dedicated to the SNPN, the measurement configurations sent by a first core network to the first base station are measurement configurations dedicated to the SNPN, and the measurement configurations include the measurement range information of the SNPN.

In an implementation, the measurement configurations include measurement configurations respectively corresponding to different RATs, and at least one measurement configuration includes the measurement range information of the non-public network. These RATs may be, for example, NR or LTE, and formats of the measurement configurations corresponding to the RATs are different. The measurement range information of the non-public network may be sent to the first base station by using a format of a measurement configuration corresponding to one RAT.

In an example, the first base station receives a group or a set of measurement configurations from the first core network device. The group of measurement configurations may include a plurality of measurement configurations respectively corresponding to a plurality of RATs. For example, the first core network device generates a group of measurement configurations {measurement configuration #1, measurement configuration #2} and sends the group of measurement configurations to the first base station. The measurement configuration #1 uses a format corresponding to a RAT#1, the measurement configuration #2 uses a format corresponding to a RAT#2, and the measurement configuration #1 includes the measurement range information of the non-public network.

In another example, the first base station may receive measurement configurations separately from a plurality of core networks, where a format of a measurement configuration sent by each core network is corresponding to a type of the core network. Specifically, the first base station may receive a measurement configuration #1 from the first core network device. The measurement configuration #1 may be a measurement configuration corresponding to a type of a first core network to which the first core network device belongs, for example, a measurement configuration in an NR format sent by the 5G core network, or a measurement configuration in an LTE format sent by the 4G core network. In addition, the first base station may further receive a measurement configuration from another core network device. For example, in addition to receiving the measurement configuration #1 from the first core network device, the first base station further receives a measurement configuration #2 that is forwarded by a second core network device located in a second core network by using the first core network device. There is a communication interface between the first core network device and the second core network device. For another example, there is also a communication interface between the first base station and the second core network, so that the first base station can directly receive the measurement configuration #2 from the second core network.

Optionally, the plurality of measurement configurations sent by the first core network device to the first base station are included in a same message, and the message may be a trace start (trace start) message. For example, a message #1 sent to the first base station includes {measurement configuration #1, measurement configuration #2}. Alternatively, these measurement configurations are included in different messages and then sent to the first base station. For example, a message #1 sent to the first base station includes the measurement configuration #1, and the measurement configuration #2 is sent in a message #2.

In an implementation, the measurement range information includes identification information of the non-public network, or includes identification information of the non-public network and identification information of a PLMN corresponding to the non-public network. If the non-public network includes the SNPN, identification information of the SNPN includes a NID of an SNPN cell. If the non-public network includes the PNI-NPN, identification information of the PNI-NPN includes identification information of a CAG to which a PNI-NPN cell belongs, and the identification information of the CAG includes a CAG identifier (CAG identifier, CAG ID) and CAG list information. In addition, the measurement range information may further include identification information of the to-be-measured cell, for example, include identification information of the SNPN cell and/or identification information of the PNI-NPN cell.

In an implementation, the measurement range information further includes neighboring cell measurement indication information, for indicating to measure a neighboring cell of the to-be-measured cell in the non-public network. Specifically, the neighboring cell measurement indication information may be inter-frequency measurement indication information, for indicating to measure a frequency channel number that is different from a frequency channel number of a target cell. After receiving the indication information, the first base station may determine to perform MDT measurement on a neighboring cell of the target cell, and notify the UE of a frequency channel number and/or identification information of the neighboring cell. The target cell is a cell that is in a non-public network and that is to be accessed or camped on by the UE, namely, a target non-public network cell, and the neighboring cell of the target cell is also a cell in the non-public network. The neighboring cell measurement indication information may be used to support the UE in performing MDT measurement on the target cell and the neighboring cell of the target cell, to obtain a more accurate and comprehensive measurement result. In an implementation, the neighboring cell measurement indication information may be a neighboring cell list. The neighboring cell list includes identification information and/or a frequency channel number of one or more neighboring cells of the to-be-measured cell.

In an implementation, because MDT measurement may be classified based on measurement ranges, measurement range information in measurement configurations of different MDT measurement types includes different content. For example, for TA based MDT or PLMN based MDT, because a PLMN corresponding to the core network that delivers the MDT configurations is the same as a PLMN for which an MDT measurement requirement is proposed, the measurement range information includes the identification information of the non-public network, and does not need to include the identification information of the PLMN. For cell based MDT or TAI based MDT, because a PLMN corresponding to the core network that delivers the MDT configurations may be different from a PLMN corresponding to the cell on which MDT measurement is to be performed, the identification information of the PLMN corresponding to the non-public network is included in addition to the identification information of the non-public network.

The following separately uses the cell based MDT and the TA based MDT as examples to describe possible information element (information element, IE) designs for measurement range information in MDT measurement configurations.

### (1) Cell based MDT

If cell based MDT measurement configuration is performed on the SNPN, the MDT measurement configuration includes measurement range information corresponding to the SNPN cell. An example is described in Table 1:

**Table 1**

| Information element name | Value range | Information element type |
|---|---|---|
| >Cell based | | |
| >>Cell ID list for MDT | *1... <preset maximum value>* | |
| >>>CGI | | |
| >>>>PLMN identifier | | |
| >>>>SNPN cell identity | | Bit string |
| >>>>SNPN NID | | Bit string |

First, it should be noted that symbols ">", ">>", ">>>", and ">>>>" in Table 1 represent levels of information elements. For example, ">" represents a first-level information element, ">>" represents a second-level information element, ">>>" represents a third-level information element, ">>>>" represents a fourth-level information element, and so on. Information elements at various levels have a nested relationship with each other based on the levels. For example, the second-level information element is included in the first-level information element, the third-level information element is included in the second-level information element, and fourth-level information elements are included in the third information element. It can be understood that the second-level information element, the third-level information element, and the fourth-level information elements are all included in the first-level information element. If symbols such as ">" appear in examples of information element designs in this application, meanings of the symbols are the same as those in Table 1. Details are not described again.

In Table 1, "Cell based" is a name of the first-level information element, indicating that content in the information element is cell based MDT-related configuration information. "Cell ID list for MDT" is a name of the second-level information element in the information element "Cell based", indicating that content in the information element is information related to an identity of a cell on which MDT measurement is to be performed. "CGI" is a name of the third-level information element in the information element "Cell ID list for MDT", and the information element "CGI" includes a cell global identity (cell global identity, CGI) of the cell on which MDT measurement is to be performed, and also includes the following fourth-level information elements for indicating the measurement range information corresponding to the SNPN cell: (1) An information element "PLMN identifier" includes identification information of a PLMN corresponding to the SNPN cell on which MDT measurement is to be performed. It can be understood that the identification information of the PLMN is specially allocated to the SNPN. (2) An information element "SNPN cell identity" includes a cell ID of the SNPN cell. (3) An information element "SNPN NID" includes a NID of the SNPN. A value of the information element "Cell ID list for MDT" is less than the preset maximum value, a type of the information element "SNPN cell identity" is a bit string (bit string), and the NID may be a 32-bit string.

In another example (not described in Table 1), the information elements "PLMN identifier", "SNPN cell identity", and "SNPN NID" may be information elements at a same level as "CGI".

If cell based MDT measurement configuration is performed on the PNI-NPN, the MDT measurement configuration includes measurement range information corresponding to the PNI-NPN cell. An example is described in Table 2:

**Table 2**

| Information element name | Value range | Information element type |
|---|---|---|
| >Cell based | | |
| >>Cell ID list for MDT | *1... <preset maximum value>* | |
| >>>CGI | | |
| >>>>PLMN identifier | | |
| >>>>PNI-NPN cell identity | | Bit string |
| >>>>>PNI-NPN cell CAG list | | |
| >>>>>>PNI-NPN cell CAG | | Bit string |

A difference from Table 1 lies in that a fifth-level information element named "PNI-NPN cell CAG list" and a sixth-level information element named "PNI-NPN cell CAG" are included in Table 2, and the two information elements belong to information elements included in a fourth-level information element "PNI-NPN cell identity". The information element "PNI-NPN cell identity" includes identification information of the PNI-NPN cell on which MDT measurement is to be performed. The information element "PNI-NPN cell CAG list" includes information about a CAG list to which the PNI-NPN cell belongs. The information element "PNI-NPN cell CAG" includes a CAG to which the PNI-NPN cell belongs. The CAG belongs to the CAG list. The CAG may be a 32-bit string. In addition, a fourth-level information element "PLMN identifier" includes identification information of a PLMN corresponding to the PNI-NPN cell on which MDT measurement is to be performed. It should be noted that, because the PNI-NPN is formed by using cell resources of a public network, the identification information of the PNI-NPN cell included in the information element "PNI-NPN cell identity" is the same as identification information of a public network cell whose resources are used, and the identification information of the PLMN in the information element "PLMN identifier" is the same as identification information of a PLMN corresponding to the public network cell. Meanings of other information elements in Table 2 are similar to meanings of information elements in Table 1 that have same names as those in Table 2. Details are not described again. In another example (not described in Table 2), the information elements "PLMN identifier" and "PNI-NPN cell identity" may be information elements at a same level as "CGI".

### (2) TA based MDT

If TA based MDT measurement configuration is performed on the SNPN, the MDT measurement configuration includes measurement range information corresponding to the SNPN cell. An example is described in Table 3:

**Table 3**

| Information element name | Value range | Information element type |
|---|---|---|
| >TA based | | |
| >>TA list for MDT | *1... <preset maximum value>* | |
| >>>TAC | | |
| >>>SNPN NID | | Bit string |

In Table 3, "TA based" is a name of a first-level information element, indicating that content in the information element is TA based MDT-related configuration information. "TA list for MDT" is a name of a second-level information element in the information element "TA based", indicating that content in the information element is information related to an identity of a tracking area on which MDT measurement is to be performed. "TAC" is a name of a third-level information element in an information element "Cell ID list for MDT", and the information element "TAC" includes a tracking area code (tracking area code, TAC) of the tracking area on which MDT measurement is to be performed. In addition, the information element "Cell ID list for MDT" further includes a third-level information element NPN NID, which includes a NID of the SNPN.

If TA based MDT measurement configuration is performed on the PNI-NPN, the MDT measurement configuration includes measurement range information corresponding to the PNI-NPN cell. An example is described in Table 4:

**Table 4**

| Information element name | Value range | Information element type |
|---|---|---|
| >TA based | | |
| >>TA list for MDT | *1... <preset maximum value>* | |
| >>>TAC | | |
| >>>PNI-NPN cell CAG list | | |
| >>>>PNI-NPN cell CAG | | Bit string |

A difference from Table 3 lies in that the information element "SNPN cell NID" is replaced with an information element "PNI-NPN cell CAG list" and an information element "PNI-NPN cell CAG" in Table 4. "PNI-NPN cell CAG list" includes information about a CAG list to which the PNI-NPN cell on which MDT measurement is to be performed belongs. The information element "PNI-NPN cell CAG" includes an identifier of a CAG to which the PNI-NPN cell belongs.

It can be understood that, if the TA based MDT is used, because the PLMN corresponding to the core network that sends the measurement configurations is the same as the PLMN corresponding to the cell on which MDT measurement is to be performed, the measurement configurations do not need to carry the identification information of the PLMN. In other words, no information element "PLMN identifier" exists in the information element designs described in Table 3 and Table 4.

An information element design of a TAI based MDT measurement configuration is similar to that of the cell based MDT measurement configuration, and for example, reference may be made to Table 1. An information element design of a PLMN based MDT measurement configuration is similar to that of the TA based MDT measurement configuration, and for example, reference may be made to Table 2. Details are not described again.

The measurement range information of the SNPN or the PNI-NPN is included in the cell based MDT, TAI based MDT, TA based MDT, or PLMN based MDT measurement configuration, or an independent information element may be designed for the measurement configuration of the SNPN or the PNI-NPN. In other words, the measurement configuration of the SNPN or the PNI-NPN is a measurement configuration at a same level as the foregoing several MDT measurement configurations. For example, an information element named "NID based" is designed for the measurement configuration of the SNPN, as described in Table 5:

**Table 5**

| Information element name | Value range | Information element type |
|---|---|---|
| >NID based | | |
| >>SNPN cell identity | | Bit string |
| >>SNPN NID | | Bit string |

For another example, an information element named "CAG list based" is designed for the measurement configuration of the PNI-NPN, as described in Table 6:

**Table 6**

| Information element name | Value range | Information element type |
|---|---|---|
| >CAG list based | | |
| >>PNI-NPN cell CAG list | | |
| >>PNI-NPN cell CAG | | Bit string |

For descriptions of the information elements in Table 5 and Table 6, refer to the foregoing information elements that have same names as those in Table 5 and Table 6. Details are not described again.

In an implementation, the measurement configurations sent by the first core network device further include PLMN range information, where the PLMN range information indicates a PLMN range effective for the MDT measurement of the UE. The PLMN range information may be a PLMN list that includes one or more PLMN identifiers. According to whether the MDT measurement configured by the core network is management based MDT measurement or signaling based MDT measurement, the PLMN list may be a management based MDT PLMN list (management based MDT PLMN list) or a signaling based MDT PLMN list (signaling based MDT PLMN list). The management based MDT PLMN list may be included in a UE context establish request (UE context establish request) message, and the signaling based PLMN list may be included in a trace start message. The messages are sent by the first core network device to the first base station.

The signaling based MDT configuration is delivered by the core network for a specific UE, and is not stored on a base station side. Therefore, to make the signaling based MDT measurement configuration targeted for the UE normally effective when the UE is handed over between cells in the non-public network, the first core network device may add the measurement range information of the non-public network to the management based MDT PLMN list sent to the first base station, so that the UE can obtain measurable information about the non-public network in time. For example, for the SNPN, the added measurement range information includes the NID of the SNPN; and for the PNI-NPN, the added measurement range information includes the CAG identification information of the PNI-NPN.

The following Table 5 and Table 6 are examples of information element designs for the PLMN list. In Table 5 and Table 6, "MDT PLMN list" is a first-level information element, indicating a PLMN list effective for the UE. "PLMN identifier" is a second-level information element in "MDT PLMN list", and includes a PLMN identifier in the PLMN list. For the SNPN, "PLMN identifier" includes a third-level information element "SNPN cell NID", including the NID of the SNPN cell. For the PNI-NPN, "PLMN identifier" includes a third-level information element "PNI-NPN cell CAG list" and a fourth-level information element "PNI-NPN cell CAG" that indicates a CAG to which the PNI-NPN cell belongs.

**Table 7**

| Information element name | Value range | Information element type |
|---|---|---|
| >MDT PLMN list | *1... <preset maximum value>* | |
| >>PLMN identifier | | |
| >>>SNPN NID | | Bit string |

**Table 8**

| Information element name | Value range | Information element type |
|---|---|---|
| >MDT PLMN list | *1... <preset maximum value>* | |
| >>PLMN identifier | | |
| >>>PNI-NPN cell CAG list | | |
| >>>>PNI-NPN cell CAG | | Bit string |

It should be noted that the examples in Table 1 to Table 8 do not constitute any limitation on formats of the measurement configurations sent by the core network device. For example, the formats may be NR formats or LTE formats. In addition, names of related information elements of the measurement range information of the non-public network, locations of the information elements in the measurement configurations, and level settings of the information elements in Table 1 to Table 6 are merely examples, and do not constitute any limitation on this application.

In the foregoing implementations, the first base station receives different types of MDT measurement configurations of the non-public networks. In addition to the measurement configurations of the non-public networks, the first base station may receive a measurement configuration of another network from the core network device.

In an implementation, the measurement configurations received by the first base station include the measurement configuration of the unlicensed band.

The unlicensed band includes spectrum resources that can be used for wireless communication in a frequency band other than government-licensed radio spectrum resources. For example, the unlicensed band is distributed on a frequency band of 2.4 gigahertz (gigahertz, GHz), 5 GHz, or 6 GHz. There are different types of access technologies for the unlicensed band based on different communication modes, for example, an LTE-based licensed assisted access (licensed assisted access, LAA) technology and an NR in unlicensed spectrum (NR in unlicensed spectrum, NR-U) technology.

In this application, the measurement configuration of the unlicensed band is a configuration used for performing MDT measurement on a cell in the unlicensed band, and may also be referred to as a measurement configuration of the access network that uses the unlicensed band. The cell in the unlicensed band may be an LAA cell or an NR-U cell, or a cell that uses another radio access technology in the unlicensed band. This is not limited.

For example, the measurement configuration of the unlicensed band includes one or more of the following: a measurement frequency channel number of the unlicensed band, a channel bandwidth of the unlicensed band, or a to-be-measured item for the unlicensed band, where the to-be-measured item includes one or more of the following: a listen before talk (listen before talk, LBT) success rate for uplink data, average LBT duration for uplink data, average energy detected by the UE in the unlicensed band, or an LBT success rate for a random access channel.

Specifically, the LBT means that a communication node (the UE or the base station) performs channel monitoring before occupying a channel; and when detecting that a preset quantity of consecutive time windows on the channel are all idle, the communication node uses the channel to transmit information (including data or signaling). Energy detection (energy detection, ED) may be used to determine whether the channel is idle. Specifically, the UE may detect signal energy generated when another communication system uses the channel in the unlicensed band. The LBT includes an LBT success and an LBT failure. The LBT success means that the communication node successfully completes the LBT before a sending time point, confirms that the channel is not occupied, and occupies the channel at the sending time point to transmit information. The LBT failure means that the communication node still cannot preempt the channel after a quantity of times of LBT exceeds a threshold, or cannot successfully preempt the channel by using the LBT before the sending time point, and consequently information cannot be sent on time. The LBT success rate is a ratio of a quantity of transmission tasks in which the channel is successfully preempted by using the LBT and information transmission is completed punctually to a total quantity of transmission tasks in which information transmission needs to be performed by using the LBT.

The MDT measurement may be periodic or event-triggered. When the MDT measurement configured by the core network device is event-triggered, the measurement configuration of the unlicensed band further includes a measurement event, and the measurement event includes: the LBT success rate for the random access channel is lower than a first threshold, or the average energy measured in the unlicensed band is higher than a second threshold. The first threshold and/or the second threshold may be predefined.

For example, in an information element design, the measurement configuration of the unlicensed band may be included in an information element that carries the MDT configurations and that is sent by the first core network device to the first base station. Specifically, the measurement configuration of the unlicensed band may be included in any type of configuration in the MDT configurations, for example, included in an M1 configuration, an M4 configuration, an M5 configuration, an M6 configuration, or an M7 configuration. In other words, the measurement configuration of the unlicensed band may be used as a part of these configurations. In another example, an information element that includes the measurement configuration of the unlicensed band is an information element that may be parallel to information elements that include configurations such as the M1 configuration, the M4 configuration, the M5 configuration, the M6 configuration, the M7 configuration, a Bluetooth measurement configuration (Bluetooth measurement configuration), a WLAN measurement configuration (WLAN measurement configuration), and a sensor measurement configuration (sensor measurement configuration). In other words, an information element may be newly added to specially carry the measurement configuration of the unlicensed band.

It can be understood that, configuring MDT measurement of the non-public network and configuring MDT measurement of the unlicensed band are independent processes, both or either of which may be performed. In an implementation, the first base station receives the measurement configuration of the non-public network and the measurement configuration of the unlicensed band. The measurement configuration of the unlicensed band and the measurement configuration of the non-public network may be included in a same measurement configuration, or may be included in different measurement configurations. If the two types of measurement configurations are included in different measurement configurations, the measurement configuration of the unlicensed band and the measurement configuration of the non-public network may be separately sent to the first base station. In another implementation, the core network device may configure only the MDT measurement of the non-public network or only the MDT measurement of the unlicensed band, and correspondingly the first base station receives the measurement configuration of the non-public network or the measurement configuration of the unlicensed band.

The method further includes S202: The first base station sends some or all of the measurement configurations to the UE.

Specifically, the first base station may send, to each UE based on a network type supported by the UE that accesses or camps on a cell served by the first base station, a measurement configuration corresponding to the network type supported by the UE. For example, if a UE #1 supports a non-public network and a public network, the first base station may send, to the UE #1, a measurement configuration of the non-public network and a measurement configuration of the public network that are included in the measurement configurations. If a UE #2 supports a non-public network and the access network that uses the unlicensed band, the first base station may send, to the UE #2, a measurement configuration of the non-public network and the measurement configuration of the unlicensed band that are included in the measurement configurations.

For example, the first base station sends the measurement configurations to the UE by using an RRC message. The RRC message is, for example, logged measurement configuration (LoggedMeasurementConfiguration) signaling.

For example, the LoggedMeasurementConfiguration signaling includes the measurement configuration of the non-public network. A PLMN identifier list (whose information element name is "plmn-IdentityList-r16") in the LoggedMeasurementConfiguration signaling may include the measurement range information of the non-public network, for example, include the identification information of the PLMN corresponding to the SNPN cell, the identification information of the SNPN cell, and the NID of the SNPN, and/or include the identification information of the PLMN corresponding to the PNI-NPN cell, the identification information of the PNI-NPN cell, and CAG information of the PNI-NPN.

Alternatively, another information element of the LoggedMeasurementConfiguration signaling may include the measurement configuration of the non-public network. Specifically, if the first base station is a gNB, the LoggedMeasurementConfiguration signaling includes an information element AreaConfig-r16, and the information element AreaConfig-r16 may include an information element including measurement range information of a non-public network cell, where the information element is referred to as, for example, CGI-Info-Logging-r16. In addition to the measurement range information, the information element may further include a tracking area identity of the to-be-measured cell in the non-public network. Similarly, if the first base station is an eNB, the LoggedMeasurementConfiguration signaling includes an information element AreaConfiguration-r10, and AreaConfiguration-r10 may include an information element including the measurement range information of the non-public network. The included information element includes PLMN information corresponding to the non-public network and the identification information of the to-be-measured cell in the non-public network.

In an example, the measurement configuration of the non-public network may serve as a container (container) to be included in a message sent by the first core network device to the first base station, and the first base station may directly transparently transmit the container to the UE without parsing content in the container.

It should be noted that, if immediate MDT is configured for the UE, the first base station may not send the measurement range information to the UE. Therefore, if the first core network device delivers an immediate MDT measurement configuration, step S202 may not be performed.

In an implementation, if the measurement configurations sent by the first core network device to the first base station include the measurement configuration of the unlicensed band, for both the immediate MDT and the logged MDT, the first base station sends the measurement configuration of the unlicensed band to the UE.

Specifically, for the logged MDT, the first base station may add an unlicensed band list to the RRC message sent to the UE, for example, the LoggedMeasurementConfiguration signaling. The unlicensed band list includes one or more measurement frequency channel numbers of the unlicensed band. The unlicensed band list may be an information element parallel to a Bluetooth measurement list (whose information element name is bt-NameList-r16), a WLAN measurement list (whose information element name is wlan-NameList-r16), and the like. In addition, related information of the measurement event of the unlicensed band may be further added to the signaling. For example, if the measurement event of the unlicensed band is that the LBT success rate for the random access channel is lower than the first threshold, or the average energy measured in the unlicensed band is higher than the second threshold, these measurement events and a value of the first threshold/second threshold may be included in the signaling, for example, included in an information element LoggedEventTriggerConfig-r16 in the signaling and then sent to the UE.

For the immediate MDT, the first base station may add the measurement configuration of the unlicensed band to an RRC reconfiguration message sent to the UE. An adding manner is similar to that of the logged MDT, and details are not described again.

After obtaining the foregoing measurement configuration, the UE may perform MDT measurement, obtain a measurement result, and send the measurement result to a serving base station of the UE. The serving base station is a base station accessed by the UE after the UE enters a connected state. The serving base station may forward the measurement result to a destination base station. The destination base station is a base station serving a cell on which the UE performs the MDT measurement and obtains the measurement result, that is, a base station corresponding to the measurement result. The serving base station may determine the destination base station based on a cell identity corresponding to the measurement result. The cell identity may be included in the measurement result, or the cell identity and the measurement result are included in one message and then sent to the serving base station. The serving base station may forward the measurement result to the destination base station directly by using an interface between base stations, or may forward the measurement result through the core network. This is not limited in this application. In another example, if a cell managed by the serving base station and the cell measured by the UE belong to a same network, for example, belong to a non-public network, even if the MDT measurement performed by the terminal is not targeted for the cell managed by the serving base station, an access network device may perform performance optimization on the network based on the measurement result, and does not need to forward a measurement report.

In an implementation, if the UE is handed over, for example, handed over from a source cell served by the first base station to the target cell served by a second base station, the first base station may send the measurement range information of the non-public network to the second base station, so that the UE can normally perform MDT measurement on the non-public network after the handover.

In this implementation, the method further includes S203: The first base station sends the measurement range information of the non-public network to the second base station.

For example, the measurement range information of the non-public network may be included in the PLMN range information. The PLMN range information indicates a PLMN range in which the UE can perform MDT measurement, and may include identification information of the PLMN corresponding to the cell that can be measured by the UE. Specifically, the PLMN range information may be a PLMN list. According to whether MDT measurement configured for the UE is signaling based MDT measurement or management based MDT measurement, the PLMN list may be a management based MDT PLMN list or a signaling based MDT PLMN list. The PLMN list includes identification information of one or more PLMNs and identification information of a non-public cell corresponding to the PLMN in the list.

In an implementation, when the UE performs intra-PLMN cell handover, that is, when the source cell and the target cell belong to a same PLMN, the first base station may directly send the PLMN range information to the second base station. For the management based MDT, the first base station may send a handover request (handover request) message or a retrieve UE context response (retrieve UE context response) message that includes the PLMN information to the second base station through an interface between base stations. For the signaling based MDT, the PLMN range information may be included in a container in the handover request message, and the handover request message is sent by the first base station to the second base station.

In another implementation, when the UE performs inter-PLMN cell handover, that is, when the source cell and the target cell belong to different PLMNs, the first base station may send the PLMN range information to the second base station through the core network. For example, for the management based MDT, the first base station may send the PLMN range information to the first core network device, and the first core network device or the second core network device that has the communication interface with the first core network device sends the PLMN range information to the second base station. The PLMN range information may be included in a handover request message, a path switch request acknowledgment (path switch request ACK) message, or the like sent to the second base station. For the signaling based MDT, the PLMN information may be included in a container in the handover request message, and the handover request message is sent by the core network device to the second base station.

For example, the PLMN range information is a management based MDT PLMN list. For the SNPN, the PLMN list includes the identification information of the PLMN corresponding to the SNPN cell that can be measured by the UE and the NID of the SNPN, and an information element design is described in Table 7. For the PNI-NPN, the PLMN list includes the identification information of the PLMN corresponding to the PNI-NPN cell that can be measured by the UE and the CAG information of the PNI-NPN, and an information element design is described in Table 8. For descriptions of the information elements in Table 7 and Table 8, refer to the foregoing Table 1 to Table 6. Details are not described again.

**Table 7**

| Information element name | Value range | Information element type |
|---|---|---|
| >MDT PLMN list | *1... <preset maximum value>* | |
| >>PLMN identifier | | |
| >>>SNPN NID | | Bit string |

**Table 8**

| Information element name | Value range | Information element type |
|---|---|---|
| >MDT PLMN list | *1... <preset maximum value>* | |
| >>PLMN identifier | | |
| >>>PNI-NPN cell CAG list | | |
| >>>>PNI-NPN cell CAG | | Bit string |

By using the measurement configuration method shown in FIG. 2, a network side may provide the measurement configuration of the non-public network and/or the measurement configuration of the unlicensed band for the UE, so that the UE performs MDT measurement on the cell in the non-public network and/or the cell in the unlicensed band, and feeds back an obtained comprehensive and accurate MDT measurement result to the network side in time, thereby optimizing network performance of the non-public network and/or the access network that uses the unlicensed band, improving communication quality of the UE.

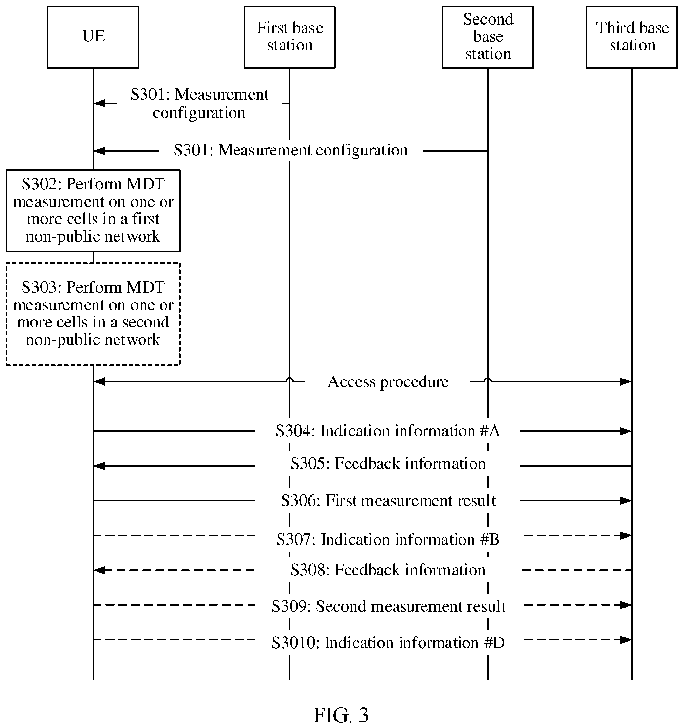

In the embodiment shown in FIG. 2, the measurement configuration method provided in this application is described mainly from a perspective of an access network device side. The following describes, mainly from a perspective of a UE side with reference to FIG. 3, a measurement configuration method provided in this application. Content described in FIG. 1 is not described again. The method includes the following steps.

S301: The UE receives measurement configurations from at least one base station, where the measurement configurations are used for MDT measurement.

For detailed descriptions of the measurement configurations, refer to related content in S201.

In an implementation, the measurement configurations include measurement range information of a non-public network. For detailed descriptions of the measurement range information, refer to related content in S201.

In an implementation, the measurement configurations include a measurement configuration of an unlicensed band. For detailed descriptions of the measurement configuration of the unlicensed band, refer to related content in S201.

For example, the measurement configurations include the measurement range information of the non-public network and the measurement configuration of the unlicensed band.

In an implementation, the measurement configurations may include a plurality of measurement configurations corresponding to different networks. For example, according to the descriptions in S201, the measurement configurations include a first measurement configuration and a second measurement configuration, the first measurement configuration includes measurement range information of a first non-public network, and the second measurement configuration includes a measurement configuration of a network different from the first non-public network.

For example, the UE may receive the plurality of measurement configurations from one base station. These measurement configurations may be considered as a group of measurement configurations, and the base station may send the group of measurement configurations to the UE by using one message.

For example, the UE may receive the plurality of measurement configurations from two or more base stations. A type and a quantity of measurement configurations received by the UE from each base station are not limited in this application. It is assumed that a measurement configuration #1 is corresponding to a non-public network, a measurement configuration #2 is corresponding to the unlicensed band, and a measurement configuration #3 is corresponding to a public network. For example, the UE receives the measurement configuration #1 from a first base station, and receives the measurement configuration #2 from a second base station. For another example, the UE receives the measurement configuration #1 from the first base station, and receives the measurement configuration #2 and the measurement configuration #3 from the second base station.

For example, a format of a measurement configuration received by the UE is corresponding to a RAT of a base station that sends the measurement configuration. For example, if the first base station and the second base station use different RATs, a format of the measurement configuration #1 received by the UE is corresponding to the first base station, and formats of the measurement configuration #2 and the measurement configuration #3 are corresponding to the second base station. For example, a format of a measurement configuration received by the UE may be different from a RAT of a base station that sends the measurement configuration. For example, the first base station is a gNB, and the first base station may transparently transmit a measurement configuration in a non-NR format to the UE, for example, send a measurement configuration in an LTE format to the UE.

In an implementation, the UE stores the plurality of received measurement configurations respectively in different logs.

For example, measurement configurations that are received by the UE and that are corresponding to different RATs respectively include measurement range information of non-public networks. For example, the UE receives a measurement configuration #4 corresponding to a first RAT and a measurement configuration #5 corresponding to a second RAT, where the measurement configuration #4 includes measurement range information of a non-public network #1, and the measurement configuration #5 includes measurement range information of a non-public network #2. In this case, the UE may store the measurement configuration #4 in a log #1, and store the measurement configuration #5 in a log #2. The non-public network #1 and the non-public network #2 may be non-public networks that are of a same type but have different identifiers, or may be non-public networks of different types.

For example, if the plurality of measurement configurations received by the UE are respectively corresponding to different network types, the UE may store these measurement configurations respectively in different logs based on the network types. For example, the UE receives a measurement configuration #6 of a non-public network, a measurement configuration #7 of the unlicensed band, and a measurement configuration #8 of a public network. In this case, the UE may store the measurement configuration #6 in a log #3, store the measurement configuration #7 in a log #4, and store the measurement configuration #8 in a log #5. In addition, measurement configurations that are of non-public networks/public networks of different types and that are received by the UE may be separately stored. For example, measurement configurations of an SNPN and a PNI-NPN may be respectively stored in different logs, and measurement configurations of NR and LTE access networks may be respectively stored in different logs. In another example, if the UE receives measurement configurations of a plurality of non-public networks that are of a same type but have different identifiers, the measurement configurations of the non-public networks may be respectively stored in different logs, or may be stored in a same log.

In this example, because the UE stores the measurement configurations separately, storage duration of the measurement configurations may be separately set. For example, the UE stores the measurement configuration #6 in the log #3, and stores the measurement configuration #7 in the log #4. When a storage time of the measurement configuration #6 exceeds first measurement duration indicated in the measurement configuration #6, the UE may delete the measurement configuration #6. When a storage time of the measurement configuration #7 exceeds second measurement duration indicated in the measurement configuration #7, the UE may delete the measurement configuration #7. The first measurement duration/second measurement duration is duration in which the UE performs MDT measurement separately based on the measurement configuration #6/measurement configuration #7. The UE may set a first timer based on the first measurement duration, where running duration of the first timer is the first measurement duration; and set a second timer based on the second measurement duration, where running duration of the second timer is the second measurement duration. Because the timers are separately set, the UE may set, for each measurement configuration, a storage time that matches measurement duration, to properly allocate storage resources.

It can be understood that in this application, in addition to the measurement configuration #6 and the measurement configuration #7, the UE may store other measurement configurations. The UE may set a timer for each received measurement configuration, and an initial value of each timer is set to measurement duration indicated in a corresponding measurement configuration. When measurement duration corresponding to a measurement configuration ends, and correspondingly a time during which the measurement configuration is stored also exceeds duration of a timer, the UE may delete the corresponding measurement configuration. In addition, after deleting the measurement configuration, the UE may further reserve a measurement result obtained based on the measurement configuration for a period of time, for example, 48 hours.

In another implementation, the UE may store the plurality of received measurement configurations in a same log. In this implementation, because all measurement configurations are in one log, the UE may set only one timer. Duration of the timer may be preset, or may be determined by the UE based on measurement duration respectively indicated in the plurality of measurement configurations. For example, the duration of the timer is set to longest measurement duration indicated to the UE. Moreover, if the UE receives a group of measurement configurations from one base station, the group of measurement configurations may be set to have uniform measurement duration. Therefore, duration of the timer may be set to the measurement duration of the group of measurement configurations. When a measurement configuration that is corresponding to any network type and that is stored in the log is in a measurable state, the timer runs normally. When the timer expires, the UE may delete all the measurement configurations stored in the log. In addition, after deleting all the measurement configurations from the log, the UE may reserve a measurement result obtained based on some or all of the measurement configurations for a period of time, for example, 48 hours.

In an implementation, if the UE receives a plurality of groups of measurement configurations respectively in chronological order, the UE may overwrite a received historical measurement configuration with a newly received measurement configuration, to release storage space in time. Specifically, the UE may store the newly received measurement configuration in a log in which the historical measurement configuration is located, and delete the historical measurement configuration. The newly received measurement configuration and the historical measurement configuration may be corresponding to a same network type or different network types.

In an implementation, when the measurement configuration includes the measurement range information of the first non-public network, the method further includes S302: The UE performs MDT measurement on one or more cells in the first non-public network based on the measurement configurations.

Specifically, the UE determines, based on the measurement range information included in the measurement configurations, that a cell currently accessed or camped on belongs to the first non-public network. In this case, the UE may perform MDT measurement on the cell, and then the UE may obtain a measurement result for the first non-public network (referred to as a first measurement result below). The first measurement result may be stored in a first measurement report.

For example, for logged MDT, after camping on a cell in the first non-public network (referred to as a camped cell below), the UE may determine, by listening to cell access related information (cell access related information, CellAccessRelatedInfo) in a system message of the camped cell, a network type corresponding to the camped cell; and determine, based on a stored measurement configuration corresponding to the network type, whether to perform MDT measurement on the camped cell. For example, if the camped cell is a PNI-NPN cell, the UE selects, from stored measurement configurations, a measurement configuration corresponding to the PNI-NPN to perform MDT measurement. For another example, for immediate MDT, after accessing a serving cell, the UE may select, based on a PLMN that the UE selects to register with and a network type corresponding to the serving cell, a corresponding measurement configuration to perform MDT measurement.

In an implementation, if the measurement configurations include the first measurement configuration and the second measurement configuration, the first measurement configuration includes the measurement range information of the first non-public network, and the second measurement configuration includes a measurement configuration of another network different from the first non-public network, the UE may perform MDT measurement when accessing or camping on a cell in the another network, and obtain and store a measurement result.

For example, the second measurement configuration includes a measurement configuration of a second non-public network. If the UE accesses or camps on the second non-public network, the method further includes S303: The UE performs MDT measurement on one or more cells in the second non-public network based on the second measurement configuration.

A process of performing the MDT measurement on the second non-public network is similar to the foregoing process of performing the MDT measurement on the first non-public network. Details are not described again.

The UE obtains a measurement result for the second non-public network (referred to as a second measurement result below).

In an example, the second measurement result is recorded in a second measurement report. In another example, the first measurement result and the second measurement result are recorded in a same measurement report. It can be learned that measurement results obtained based on different measurement configurations may be stored in a same measurement report or different measurement reports.

In an implementation, the method further includes: The UE sends first indication information to a serving base station, where the first indication information indicates whether there is a reportable MDT measurement result for a specific network type. The specific network type includes one or more of the following: a non-public network, a public network, and an access network that uses the unlicensed band. For example, the non-public network includes the first non-public network. It can be learned that, the indicating, by the UE to the serving base station, whether there is a reportable MDT measurement result is associated with the network type, and the serving base station can quickly and clearly learn, based on the indication information, which type of network has an MDT measurement result, thereby improving network performance optimization efficiency and accuracy.

The first indication information may be included in any RRC message sent by the UE to the serving base station, for example, an RRC connection reconfiguration complete (RRCConnectionReconfigurationComplete) message, an RRC connection re-establishment complete (RRCConnectionReestablishmentComplete) message, or an RRC connection setup complete (RRCConnectionSetupComplete) message. Alternatively, an RRC message that specially carries the first indication information may be set. This is not limited.

For example, the first indication information may be used as an information element in the RRC message. For example, a value of the first indication information is a Boolean value. For example, "false" or "null" indicates that no measurement result can be reported, "true" indicates that a measurement result can be reported, and vice versa. For example, the first indication information may be a bit string including one or more bits, for example, including one bit. In addition, if a value of the bit is "0", it indicates that no measurement result can be reported, or if a value of the bit is "1", it indicates that a measurement result can be reported, and vice versa.

In another implementation, the first indication information indicates that there is a reportable MDT measurement result for a specific network type. In other words, when there is a measurement result, the terminal sends the first indication information; or if there is no measurement result, the terminal does not send the first indication information. For example, if an RRC message includes the first indication information, it indicates that a measurement result can be reported; or if an RRC message does not include the first indication information or an information element of the first indication information is in an absent (absent) state, it indicates that no measurement result can be reported.

Specifically, after the UE enters a connected state, for example, after the UE accesses a third base station, the UE may send the MDT measurement result to the third base station. The third base station may be used as the serving base station of the UE, and the serving cell of the UE is a cell managed by the third base station. The third base station may be the first base station, or a base station different from the first base station.

In this implementation, the method further includes S304: The UE sends indication information #A to the third base station, where the indication information #A indicate that there is a reportable measurement result for the first non-public network. Specifically, the UE determines whether a PLMN corresponding to a currently accessed serving cell belongs to a PLMN list indicated in the measurement configurations, and determines, based on a type of the currently accessed network, whether there has been a reportable measurement result for MDT measurement corresponding to the network type. If the PLMN corresponding to the serving cell belongs to the PLMN list indicated in the measurement configurations, and there has been a reportable measurement result for the type of the currently accessed network, the UE may send the indication information #A to the third base station. For example, the first non-public network is the PNI-NPN, and the UE selects, from the stored measurement configurations, the measurement configuration corresponding to the PNI-NPN, to perform MDT measurement on a first PNI-NPN cell that is in the PNI-NPN and that is camped on or accessed by the UE and a neighboring cell of the first PNI-NPN cell, so as to obtain a measurement result. When the UE accesses a second PNI-NPN cell managed by the third base station that supports the PNI-NPN, the UE determines that a PLMN corresponding to the second PNI-NPN cell belongs to a PLMN list indicated in the measurement configuration that is corresponding to the PNI-NPN and that has been stored by the UE, and then the UE determines that the MDT measurement result for the PNI-NPN can be sent to the third base station. In this case, the UE sends, to the third base station, the indication information #A indicating that there is a reportable MDT measurement result for the PNI-NPN.

S305: The UE receives feedback information from the third base station, where the feedback information indicates that the UE can report the measurement result.

For example, after receiving the indication information #A, the third base station sends the feedback information to the UE if the third base station allows the UE to report the measurement result.

S306: The UE sends the first measurement result to the third base station.

In an implementation, if the UE further performs MDT measurement on a network other than the first non-public network, for example, the second non-public network, the method further includes S307: The UE sends indication information #B to the third base station, where the indication information #B indicates that there is a reportable measurement result for the second non-public network.

S308: The UE receives feedback information from the third base station, where the feedback information indicates that the UE can report the measurement result.

S309: The UE sends the second measurement result to the third base station.

For descriptions of S307 to S309, refer to S304 to S306.

In addition, if the UE further performs MDT measurement on a cell in the unlicensed band, for example, an NR-U cell or an LAA cell, and obtains a measurement result, the UE may also send indication information #C to the third base station. The indication information #C indicates that there is a reportable measurement result for the cell in the unlicensed band. For a specific process, refer to S304 to S306 and S307 to S309. Details are not described again.

The indication information #A, the indication information #B, and the indication information #C are examples of the first indication information. It can be understood that indication information corresponding to different network types may be included in a same message and then sent to the third base station. For example, the indication information #A, the indication information #B, and the indication information #C may be included in a same RRC message. These pieces of indication information may be located at different locations in the RRC message, for example, used as independent information elements, to distinguish between network types respectively corresponding to indicated measurement results. Alternatively, these pieces of indication information may be represented in different manners, for example, using bit strings with different values, to distinguish between network types respectively corresponding to indicated measurement results.

For example, the UE sends an RRC message to the third base station, and the message includes {information element #1 (value 1), information element #2 (value 2), information element #3 (value 3), information element #4 (value 4)}. The information element #1 is corresponding to a measurement result of a PNI-NPN cell, the information element #2 is corresponding to a measurement result of an SNPN cell, the information element #3 is corresponding to a measurement result of the NR-U cell, and the information element #4 is corresponding to a measurement result of the LAA cell. The value 1 to the value 4 are Boolean values, "true" indicates that there is a measurement result, and "false" indicates that there is no measurement result. When the third base station is a base station that supports the PNI-NPN, and the UE has a reportable measurement result for the PNI-NPN, the RRC message sent by the UE includes {information element #1 (true), information element #2 (false), information element #3 (false), information element #4 (false)}. For another example, the UE may send an RRC message including only {information element #1 (value 1)}, indicating that there is a reportable measurement result only for a PNI-NPN cell.

In another example, same indication information may indicate that there are reportable measurement results for cells corresponding to two or more network types, that is, the specific network type includes two or more network types. For example, indication information #1 indicates that there are reportable measurement results for a non-public cell and the cell in the unlicensed band.

In another example, the UE may indicate, to the third base station, only that there is a to-be-reported measurement result, but does not indicate a network type for which the measurement result is targeted. In other words, the UE may report only one piece of indication information indicating whether there is a to-be-reported measurement result, where the indication information is not corresponding to a specific network type.

In an implementation, the method further includes: The UE sends second indication information to a serving base station, where the second indication information indicates whether the UE is capable of receiving an updated measurement configuration corresponding to a specific network type.

In another implementation, the second indication information indicates that the UE is capable of receiving an updated measurement configuration corresponding to a specific network type.

For descriptions of the specific network type, refer to the foregoing related content. In addition, a transmission mode and a design manner of the second indication information are similar to those of the first indication information. Details are not described again.

In some possible designs, when the UE has not completed MDT measurement or has not reported a result, the UE may give an indication to the serving base station that the UE does not receive the updated measurement configuration, and that the UE receives the updated measurement configuration after the UE completes the MDT measurement and reports the measurement result. The MDT measurement may be any type of MDT measurement, for example, management based MDT measurement, signaling based MDT measurement, immediate MDT measurement, or logged MDT measurement. In an example, different types of MDT may be defined to have different priorities, and high-priority MDT is preferentially executed and a measurement result is preferentially reported for the high-priority MDT. For example, a priority of the signaling based MDT is higher than that of management based MDT. When the UE is configured with high-priority MDT and has not completed related measurement, or the UE has not reported a measurement result for the high-priority MDT, the UE preferentially completes measurement of the high-priority MDT and reports the result, and does not need to be configured with a low-priority MDT measurement configuration. Therefore, the UE may send, to the serving base station, the indication information indicating whether the UE is capable of receiving the updated MDT measurement configuration. In this application, the second indication information is corresponding to the specific network type, and therefore the serving base station can quickly and clearly learn a specific network type for which the updated measurement configuration needs to be delivered, thereby improving network performance optimization efficiency and accuracy.

That the UE accesses the third base station is still used as an example. In this implementation, the method further includes S3010: The UE sends indication information #D to the third base station, where the indication information #D indicates whether an updated first measurement configuration can be received for the first non-public network.

The updated first measurement configuration may be a low-priority MDT measurement configuration that is updated by the third base station for the first non-public network, or all measurement configurations updated for the first non-public network, that is, MDT priorities corresponding to the measurement configurations are not distinguished from each other. In other words, the updated first measurement configuration includes at least the low-priority MDT measurement configuration for the first non-public network. The third base station may determine, based on the indication information #D, whether to send the updated first measurement configuration to the UE. For example, the indication information #D indicates that the UE is performing measurement of high-priority MDT for the first non-public network or that reporting of a measurement result for the high-priority MDT has not been completed. In this case, the third base station determines not to deliver the updated first measurement configuration. In addition, the third base station can still deliver a low-priority MDT measurement configuration corresponding to another network type. After receiving the updated measurement configuration, the UE may store the updated measurement configuration in a corresponding log based on the network type corresponding to the updated measurement configuration.

In an example, the UE further receives and stores a measurement configuration of a network other than the first non-public network, for example, the UE further stores the second measurement configuration in addition to the first measurement configuration, where the second measurement configuration is a low-priority MDT measurement configuration for the second non-public network, or all measurement configurations updated for the second non-public network. In this case, in addition to the indication information #D, the UE further sends indication information #E to the third base station, where the indication information #E indicates whether an updated second measurement configuration can be received for the second non-public network. In addition, if the UE further receives the measurement configuration of the unlicensed band, the message may further include indication information #F indicating whether the UE is capable of receiving an updated measurement configuration of the unlicensed band.

The indication information #A, the indication information #B, and the indication information #C are examples of the second indication information. For example, the indication information #D, the indication information #E, and the indication information #F are different information elements included in a same message. For example, a value of the indication information #D, the indication information #E, or the indication information #F may be a Boolean value. For example, "true" indicates that a measurement result for high-priority MDT has not been reported or measurement of the high-priority MDT is being performed, and in this case, the third base station may determine not to deliver a low-priority MDT measurement configuration; and "false" indicates that reporting of a measurement result for high-priority MDT has been completed or measurement of the high-priority MDT is not being performed, and in this case, the third base station may determine to deliver a low-priority MDT measurement configuration. For another example, "true" indicates that the UE may receive an updated low-priority MDT measurement configuration, and "false" indicates that the UE does not receive an updated low-priority MDT measurement configuration. For another example, "true" indicates that measurement of high-priority MDT is being performed, "false" indicates that a measurement result of high-priority MDT has not been reported, and "null" is a null value and indicates that measurement of high-priority MDT is not being performed and no result is to be reported. If the third base station receives indication information with a value of "true" or "false", the third base station may determine not to deliver a low-priority MDT measurement configuration. If the third base station receives indication information with a value of "null", the third base station may determine to deliver a low-priority MDT measurement configuration.

In another example, same indication information may indicate that the UE may receive or not receive updated measurement configurations for cells corresponding to two or more network types, that is, the specific network type includes two or more network types. For example, indication information #2 indicates that updated measurement configurations can be received for both a non-public cell and the cell in the unlicensed band.

In another example, the UE sends, to the third base station, indication information indicating the third base station not to deliver an updated measurement configuration, provided that the UE determines that high-priority MDT for any network type is being measured or a measurement result has not been reported. Specifically, the UE may send only one piece of indication information to the third base station, where the indication information is not corresponding to a specific network type. After receiving the indication information, the third base station may determine not to send an updated measurement configuration for any network type to the UE.

By using the measurement configuration method provided in the embodiment in FIG. 3, the UE may obtain the measurement configuration of the non-public network and/or the measurement configuration of the unlicensed band, performs MDT measurement on the cell in the non-public network and/or the cell in the unlicensed band, and feeds back an obtained measurement result to a network side in time, to optimize network performance of the non-public network and/or the access network that uses the unlicensed band, and improve communication quality of the UE. Further, the measurement configurations obtained by the UE may include MDT measurement configurations corresponding to a plurality of network types, to perform more comprehensive and accurate MDT measurement, and improve network performance optimization effect.

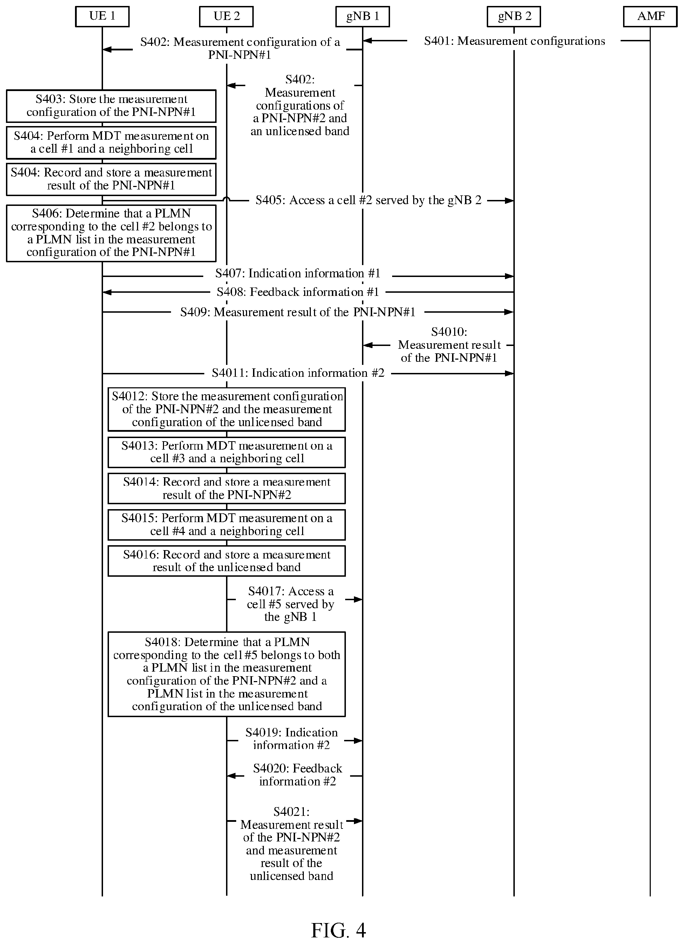

Based on the measurement configuration methods described in FIG. 2 to FIG. 3, the following describes measurement configuration methods provided in this application from a perspective of information exchange with reference to FIG. 4 to FIG. 5 and by using specific devices as examples. Content described in FIG. 2 to FIG. 3 is not repeated. As shown in FIG. 4, devices that perform the measurement configuration method include terminals UE 1 and UE 2, access network devices gNB 1 and gNB 2, and a core network device AMF.

S401: The AMF sends measurement configurations used for MDT measurement to the gNB 1.

The measurement configurations are generated by the AMF, and the measurement configurations include a measurement configuration of a PNI-NPN#1, a measurement configuration of a PNI-NPN#2, and a measurement configuration of an unlicensed band. The PNI-NPN#1 and the PNI-NPN#2 have different identifiers. The measurement configurations may use an NR format.

The gNB 1 is a base station that supports the PNI-NPN#1 and the PNI-NPN#2, and the gNB 1 supports communication in the unlicensed band.

S402: The gNB 1 sends the measurement configuration of the PNI-NPN#1 to the UE 2 that supports the PNI-NPN#1, and sends the measurement configuration of the PNI-NPN#2 and the measurement configuration of the unlicensed band to the UE 2 that supports the PNI-NPN#2 and an access network that uses the unlicensed band.

S403: The UE 1 stores the measurement configuration of the PNI-NPN#1.

S404: After accessing or camping on a cell #1 in the PNI-NPN#1, the UE 1 performs MDT measurement on the cell #1 and a neighboring cell based on the measurement configuration of the PNI-NPN#1.

It is assumed that the cell #1 is formed by using cell resources of the gNB 1.

S404: The UE 1 records and stores a measurement result of the PNI-NPN#1.

Specifically, the UE 1 may set a timer based on measurement duration indicated in the measurement configuration of the PNI-NPN#1. After the timer expires, the UE 1 deletes the measurement configuration, and stores the measurement result of the PNI-NPN#1 for a period of time.

S405: The UE 1 accesses a cell #2 served by the gNB 2.

The gNB 2 is a base station that supports the PNI-NPN#1. Specifically, the UE #1 may be handed over from the gNB 1 to the gNB 2. In a process in which the UE #1 is handed over to the gNB 2, the gNB 1 may send measurement range information of the PNI-NPN#1 to the gNB 2.

S406: The UE 1 determines that a PLMN corresponding to the cell #2 belongs to a PLMN list in the measurement configuration of the PNI-NPN#1.

S407: The UE 1 sends, to the gNB 2, indication information #1 indicating that the measurement result of the PNI-NPN#1 can be reported.

S408: The gNB 2 sends feedback information #1 for the indication information #1 to the UE 1, to indicate that the UE can report the measurement result of the PNI-NPN#1.

S409: The UE 1 sends the measurement result of the PNI-NPN#1 to the gNB 2 based on the feedback information #1.

Optionally, the UE #1 further sends an identity of the cell #1 to the gNB 2 together with the measurement result of the PNI-NPN#1.

S4010: The gNB 2 forwards the measurement result of the PNI-NPN#1 to the gNB 1.

In an implementation, if the measurement result of the PNI-NPN#1 sent in S409 is a measurement result for low-priority MDT, and the UE #1 still has not completed measurement of high-priority MDT or a measurement result has not been reported, the method further includes S4011: The UE 1 sends indication information #2 to the gNB 2, to indicate that an updated measurement configuration does not need to be received for the PNI-NPN#1.

S4012: The UE 2 separately stores the measurement configuration of the PNI-NPN#2 and the measurement configuration of the unlicensed band respectively in two logs.

S4013: After accessing or camping on a cell #3 in the PNI-NPN#2, the UE 2 performs MDT measurement on the cell #3 and a neighboring cell based on the measurement configuration of the PNI-NPN#2.

S4014: The UE 2 records and stores a measurement result of the PNI-NPN#2.

S4015: After accessing or camping on a cell #4 that uses the unlicensed band, the UE 2 performs MDT measurement on the cell #4 and a neighboring cell based on the measurement configuration of the unlicensed band.

S4016: The UE 2 records and stores a measurement result of the unlicensed band.

The measurement result of the PNI-NPN#2 and the measurement result of the unlicensed band may be included in a same measurement report or different measurement reports.

It can be understood that, there is no limitation on priorities of performing MDT measurement on the non-public networks or the access network that uses the unlicensed band, and the priorities depend only on a cell in a specific network to which the UE is connected. There is no limitation on an execution sequence between S4013-S4014 and S4015-S4016. The foregoing description is merely an example.

S4017: The UE 2 accesses a cell #5 served by the gNB 1.

S4018: The UE 2 determines that a PLMN corresponding to the cell #5 belongs to both a PLMN list in the measurement configuration of the PNI-NPN#2 and a PLMN list in the measurement configuration of the unlicensed band.

S4019: The UE 2 sends, to the gNB 1, indication information #2 indicating that the measurement result of the PNI-NPN#2 and the measurement result of the unlicensed band can be reported.

S4020: The gNB 1 sends feedback information #2 for the indication information #2 to the UE 1, to indicate that the UE 2 can report the measurement results.

S4021: The UE 2 reports the measurement result of the PNI-NPN#2 and the measurement result of the unlicensed band to the gNB 1 based on the feedback information #2.

It can be understood that, the foregoing steps S403-S4011 and S4012-S4020 are steps in an MDT measurement process for the two UEs respectively, the numbers are merely examples, and there is no limitation on an execution sequence.

By using the foregoing method, a network side may separately configure measurement configurations corresponding to one or more network types for a plurality of UEs, and the UEs may use the received measurement configurations to perform MDT measurement on different networks, so that the network side can obtain comprehensive and accurate measurement results, and improve performance optimization effect for various types of networks. In addition, the UEs may separately store the received measurement configurations corresponding to the different networks, to properly allocate storage resources, and improve measurement accuracy and efficiency.

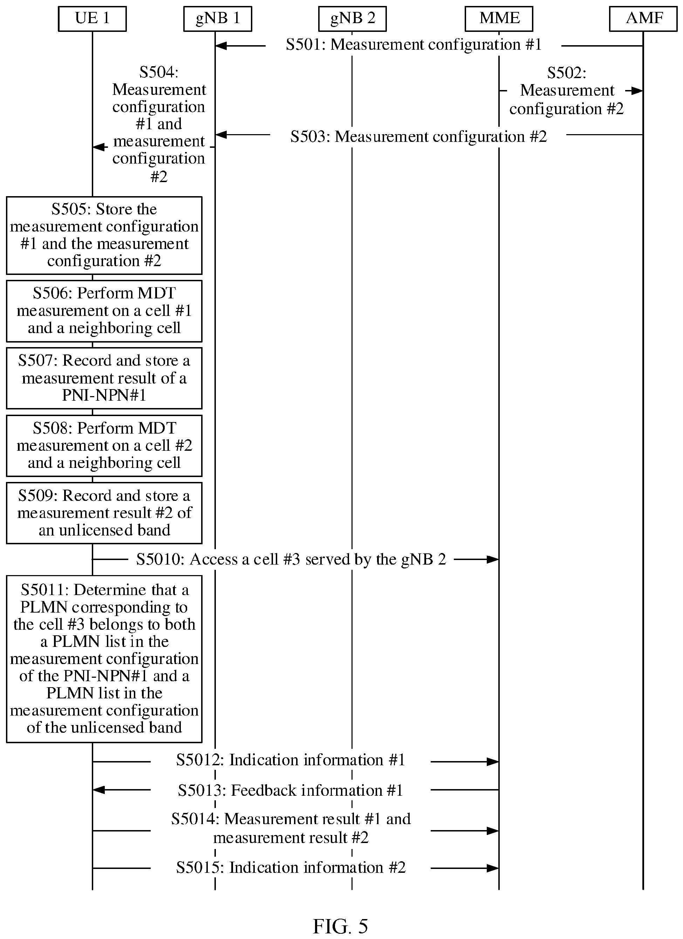

As shown in FIG. 5, devices that perform the measurement configuration method include a terminal UE 1, access network devices gNB 1 and gNB 2, and core network devices AMF and MME.

S501: The AMF sends a measurement configuration #1 used for performing MDT measurement on a PNI-NPN#1 to the gNB 1.

The measurement configuration #1 uses an NR format.

S502: The MME sends a measurement configuration #2 used for performing MDT measurement on a cell in an unlicensed band to the AMF.

S503: The AMF sends the measurement configuration #2 to the gNB 1.

The measurement configuration #2 uses an LTE format.

S504: The gNB 1 sends the measurement configuration #1 and the measurement configuration #2 to the UE 1.

The UE 1 supports communication in the PNI-NPN and supports communication in an access network that uses the unlicensed band.

S505: The UE 1 stores the measurement configuration #1 and the measurement configuration #2 in a same log.

In an implementation, the UE 1 may set a timer for the log. After the timer expires, the UE 1 deletes all measurement configurations stored in the log.

S506: After accessing or camping on a cell #1 in the PNI-NPN#1, the UE 1 performs MDT measurement on the cell #1 and a neighboring cell based on the measurement configuration #1. It is assumed that the cell #1 is formed by using cell resources of the gNB 1.

S507: The UE 1 records and stores a measurement result #1 of the PNI-NPN#1.

S508: After accessing or camping on a cell #2 that uses the unlicensed band, the UE 1 performs MDT measurement on the cell #2 and a neighboring cell based on the measurement configuration #2.

S509: The UE 1 records and stores a measurement result #2 of the unlicensed band.

The measurement result #1 and the measurement result #2 may be stored in a same measurement report or different measurement reports.

There is no limitation on an execution sequence between S506-S507 and S508-S509. The foregoing description is merely an example.

S5010: The UE 1 accesses a cell #3 served by the gNB 2.

The gNB 2 is a base station that supports the PNI-NPN#1 and the unlicensed band. Specifically, the UE 1 may be handed over from the gNB 1 to the gNB 2. In a process in which the UE 1 is handed over to the gNB 2, the gNB 1 may send measurement range information of the PNI-NPN#1 to the gNB 2.

S5011: The UE 1 determines that a PLMN corresponding to the cell #3 belongs to both a PLMN list in the measurement configuration of the PNI-NPN#1 and a PLMN list in the measurement configuration of the unlicensed band.

S5012: The UE 1 sends, to the gNB 2, indication information #1 indicating that the measurement result of the PNI-NPN#1 and the measurement result of the unlicensed band can be reported.

S5013: The gNB 2 sends feedback information #1 for the indication information #1 to the UE 1, to indicate that the UE 1 can report the measurement results.

S5014: The UE 1 reports the measurement result #1 and the measurement result #2 to the gNB 2 based on the feedback information #1.

In an implementation, if the measurement result #1 and/or the measurement result #2 that are/is sent in S5014 are/is measurement results for low-priority MDT, and the UE 1 still has not completed measurement of high-priority MDT for the PNI-NPN#1 and/or the cell in the unlicensed band or a measurement result has not been reported, the method further includes S5015: The UE 1 sends indication information #2 to the gNB 2, to indicate that an updated measurement configuration does not need to be received for the PNI-NPN#1 and/or the unlicensed band.

By using the foregoing method, the UE may store together all measurement configurations that are corresponding to a plurality of network types and that are received from different core networks, and use the received measurement configurations to perform MDT measurement for different networks. This can reduce occupied storage resources on the UE side, simplify a measurement procedure, and improve measurement efficiency.

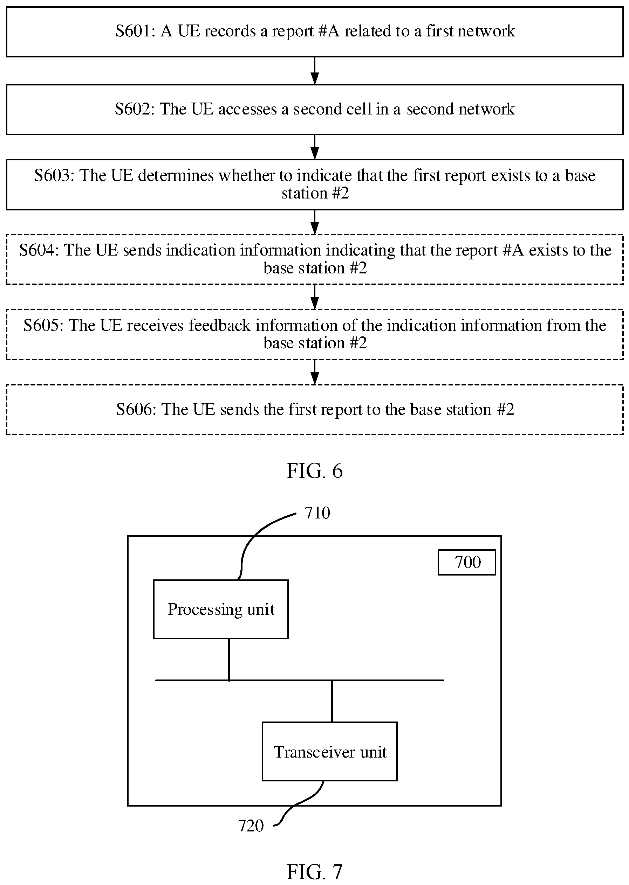

In the foregoing implementations, the following descriptions are provided in this application: Whether a PLMN corresponding to a serving base station is in a PLMN list in a measurement configuration is used as a basis for determining, by the UE, whether to send an MDT measurement result to the serving base station. In another implementation, the UE may record network identification information corresponding to an MDT measurement result, and determine, based on the network identification information, whether to indicate that the MDT measurement result exists to a serving base station. Moreover, in addition to the MDT measurement result, the UE may further record other types of information used for network performance optimization. These pieces of information may be included in different reports, and these reports may be referred to as self-organizing network (self-organizing network, SON) reports. In this application, the SON report may be any report used for network performance optimization, for example, including one or more of the following: an MDT report, an RLF report, an SHR, a RA report, a CEF report, a secondary-cell change failure report, or a secondary-cell change success report. For reporting of various types of SON reports, an implementation of determining, based on network identification information, whether to indicate that an SON report exists to a serving base station may be used. The following describes this implementation in detail with reference to FIG. 6. As shown in FIG. 6, this application provides an information recording method, including the following steps.

S601: A UE records a report #A related to a first network.

Specifically, when the UE communicates with a first cell in the first network, a corresponding SON report may be recorded in different communication phases or when a communication event occurs. Information in the SON report may be used to optimize network performance, for example, optimize a communication connection between the UE and the first network, thereby improving access efficiency and avoiding a connection failure. For example, the UE records a RA report related to a random access procedure performed for the cell; when a radio link failure occurs in a connection between the UE and the first cell, the UE records an RLF report; or after camping on or accessing the first cell, the UE performs MDT measurement on the first cell and a neighboring cell based on an MDT measurement configuration of the first network, and records an MDT report. The report #A may be any one or more SON reports. The UE may store the recorded report #A for a period of time.

In an example, if the report #A is an MDT report, the MDT report may include the measurement results described in any one of the embodiments shown in FIG. 2 to FIG. 5, namely, the MDT measurement results. The MDT report may be obtained by using the measurement configurations and the measurement process described in any one of the embodiments shown in FIG. 2 to FIG. 5. For details, refer to the foregoing related content. Details are not described again.

In an implementation, the method further includes S602: The UE records network identification information corresponding to the first report.

For example, the network identification information includes a part or all of identification information of a subscribed network of the UE. Specifically, the UE may subscribe to various networks deployed by one or more operators, for example, a public network, a non-public network, or an access network that uses an unlicensed band. The UE records and stores subscription information, where the subscription information includes related information of each network to which the UE can subscribe. In this way, after moving to a cell in a network to which the UE can subscribe, the UE may perform network subscription and registration, to obtain a communication service provided by the network. The network identification information recorded by the UE may be a part or all of the subscription information.

For example, the network identification information recorded by the UE includes a PLMN identifier, or includes a PLMN identifier and a network identifier. The network identifier may be a network identifier of a non-public network, for example, a NID or a CAG ID.

In an example, when the first network is an SNPN, the network identification information corresponding to the first report includes a PLMN identifier corresponding to the SNPN, or includes a PLMN identifier and a NID that are corresponding to the SNPN. It is assumed that the UE subscribes to a public network of an operator #1, an SNPN#1, and an SNPN#2, an identifier of the operator #1 is a PLMN ID#1, a NID#1 is allocated to the SNPN#1, and the NID#1 is allocated to the SNPN#2. Subscription information of the UE may include an {{PLMN ID#1, NID#1}, {PLMN ID#1, NID#2}, PLMN ID#1}. The PLMN ID#1 identifies the public network of the operator #1, the PLMN ID#1 and the NID#1 are network identifiers of the SNPN#1, and the PLMN ID#1 and the NID#2 are network identifiers of the SNPN#2. Assuming that the first network is the SNPN#1, that is, the first report is recorded for the SNPN#1, the UE may record some subscription information related to the SNPN#1, for example, record a PLMN#1 or record the PLMN ID#1 and the NID#1; but does not record other content in the subscription information, for example, does not record identification information of the SNPN#2 and identification information of the public network. Because SNPNs may not communicate with each other, or an SNPN and a public network may not communicate with each other, only identification information of the SNPN for which the first report is targeted is recorded. This can reduce occupied storage resources of the UE, and can improve efficiency of performing network performance optimization on the SNPN.

In an example, when the first network is a PNI-NPN, the network identification information corresponding to the first report includes a PLMN identifier corresponding to the PNI-NPN, or includes a PLMN identifier corresponding to the PNI-NPN and an identifier of another PLMN to which the UE subscribes, or includes a PLMN identifier and CAG identification information that are corresponding to the PNI-NPN, or includes a PLMN identifier corresponding to the PNI-NPN, an identifier of another PLMN to which the UE subscribes, CAG identification information of the PNI-NPN, and CAG identification information of another PNI-NPN supported by a PLMN corresponding to the PNI-NPN. The CAG identification information includes a CAG ID, or a CAG ID and CAG list information. It is assumed that the UE subscribes to an operator #2 and an operator #3, the operator #2 is identified by a PLMN ID#2, and the operator #3 is identified by a PLMN ID#3; and the operator #2 deploys a PNI-NPN#1 and a PNI-NPN2, a CAG ID#1 is allocated to the PNI-NPN#1, a CAG ID#2 is allocated to the PNI-NPN#2, and the operator #3 deploys a public network. Subscription information of the UE may include a {{PLMN ID#2, CAG ID#1 }, {PLMN ID#2, CAG ID#2}, PLMN ID#3}. The PLMN ID#2 and the CAG ID#1 are network identifiers of the PNI-NPN#1, the PLMN ID#2 and the CAG ID#2 are network identifiers of the PNI-NPN#2, and the PLMN ID#3 identifies the public network of the operator #3. Assuming that the first network is the PNI-NPN#1 and the first report is a report for the PNI-NPN#1, the network identification information recorded by the UE may include all subscription information of the UE, that is, include the PLMN ID#2 and the CAG ID#1, the PLMN ID#2 and the CAG ID#2, and the PLMN ID2. Alternatively, the network identification information recorded by the UE may include the PLMN ID#2 and the PLMN ID#3. Alternatively, the UE may record some subscription information related to the PNI-NPN#1, for example, including the PLMN ID#2 and the CAG ID#1, but does not record other content in the subscription information, for example, not including the PLMN ID#2 and the CAG ID#2, and the PLMN ID2. Alternatively, the UE may record some subscription information related to the PNI-NPN#1 and some of other content in the subscription information, for example, record the PLMN ID#2 and the CAG ID#1, and record the PLMN ID#2 and the CAG ID#2.

Because the PNI-NPN may be a slice of a public network, in addition to recording identification information of the PNI-NPN for which the first report is targeted, the terminal may further record identification information of another public network and another PNI-NPN to which the terminal subscribes, so that a large quantity of access network devices can obtain the first report. This is conducive to improving network performance optimization effect.

It can be understood that S602 and S601 may be performed simultaneously, that is, the UE records the network identification information corresponding to the first report while recording the first report. For example, the network identification information may be included in the first report.

S602: The UE accesses a second cell in a second network.

The second cell may be referred to as a serving cell of the UE, and a base station to which the second cell belongs may be referred to as a serving base station of the UE.

In an example, the second cell and the first cell belong to a same network, that is, the second network is the same as the first network. In another example, the second cell and the first cell belong to different networks, that is, the second network is different from the first network, and the second network is a registered network of the UE. For example, the first network or the second network includes any one of the following: a public network, a non-public network, and an access network that uses the unlicensed band. The non-public network may be an SNPN or a PNI-NPN. For detailed descriptions of various networks, refer to the foregoing related content. Details are not described again.

S603: The UE determines whether to indicate that the first report exists to a base station to which the second cell belongs (referred to as a base station #2 below).

In an implementation, the terminal determines, based on network identification information broadcast by the base station #2 in the second cell and the network identification information corresponding to the first report, whether to indicate that the first report exists to the base station #2. For example, if a part or all of the network identification information broadcast by the base station #2 belongs to the network identification information corresponding to the first report, the UE determines to send indication information indicating that the first report exists to the base station #2. The network identification information broadcast by the base station #2 in the second cell includes registered-network identification information of the UE. The registered-network identification information includes identification information of the registered network of the UE in the second cell, for example, includes identification information of a registered public network and/or identification information of a registered non-public network. The identification information of the registered public network may include a registered PLMN identifier. The identification information of the registered non-public network may include a registered PLMN identifier, or include a registered PLMN identifier and a network identifier of the registered non-public network, for example, a NID or a CAG ID.

In an example, if all registered-network identification information of the UE in the second cell is included in the network identification information corresponding to the first report recorded by the UE, the UE determines to send the indication information indicating that the first report exists to the second cell. For example, if the UE determines that the registered PLMN identifier of the UE in the second cell is included in the network identification information corresponding to the first report, and the UE determines that the network identifier of the registered non-public network of the UE in the second cell is included in network identification information that is of non-public networks and that is included in the registered PLMN identifier corresponding to the first report, the UE determines to send the indication information indicating that the first report exists to the second cell. It is assumed that the network identification information corresponding to the first report recorded by the UE is the PLMN ID#1 and the NID#1, and the registered-network identification information of the UE in the second cell includes the PLMN ID#1 and the NID#1. If the UE determines that the PLMN ID#1 registered in the second cell is included in the network identification information corresponding to the first report, and if the UE determines that the NID#1 registered in the second cell is also included in the network identification information corresponding to the first report, the UE determines to send the indication information indicating that the first report exists to the base station #2. For another example, if the UE determines that information about the registered PLMN identifier and first network identification information of the UE in the second cell are included in the network identification information corresponding to the first report, the UE determines to send, to the second cell, the indication information indicating that the first report is stored. Assuming that the network identification information corresponding to the first report recorded by the UE is the PLMN ID#1 and the NID#1, and the registered-network identification information of the UE in the second cell includes the PLMN ID#1 and the NID#2, the UE determines that the NID#2 registered in the second cell is not included in the network identification information corresponding to the first report. In this case, the UE determines not to send the indication information indicating that the first report exists to the base station #2. The determining, by the UE, the PLMN ID registered in the second cell and determining whether the non-public network identifier is in the network identification information corresponding to the recorded first report may be performed simultaneously or sequentially. This is not limited.

In another example, if a part of registered-network identification information of the UE in the second cell is included in the network identification information corresponding to the first report, the UE determines to send the indication information indicating that the first report exists to the base station #2. For example, if the first network is the PNI-NPN, the UE may determine only whether the registered PLMN identifier of the UE in the second cell is included in the network identification information recorded by the UE. Assuming that the network identification information corresponding to the first report recorded by the UE includes the PLMN ID#1 and the CAG ID#1, the PLMN ID#1 and the CAG ID#2, and the PLMN ID#2, if the registered-network identification information of the UE in the second cell includes the PLMN ID#1 and the CAG ID#3, the UE determines that the PLMN ID#1 registered in the second cell is included in the network identification information corresponding to the first report. In this case, the UE determines to send the indication information indicating that the first report exists to the second cell. Alternatively, the UE may determine whether a registered PLMN of the UE in the second cell and a corresponding CAG ID are included in the network identification information recorded by the UE. Still assuming that the network identification information corresponding to the first report includes the PLMN ID#1 and the CAG ID#1, the PLMN ID#1 and the CAG ID#2, and the PLMN ID#2, if the registered-network identification information of the UE in the second cell includes the PLMN ID#1, the CAG ID#1, and the CAG ID#3, the UE determines that the PLMN ID#1 and the CAG ID#1 that are registered in the second cell are included in the network identification information corresponding to the first report. In this case, the UE determines to send the indication information indicating that the first report exists to the second cell.

In an implementation, when the UE determines to send the indication information to the base station #2, the method further includes the following steps:
S604: The UE sends the indication information indicating that the report #A exists to the base station #2.
S604: The UE receives feedback information of the indication information from the base station #2.
S605: The UE sends the first report to the base station #2.

By using the information recording method provided in FIG. 6, the UE can accurately and quickly determine, based on the network identification information corresponding to the recorded SON report, whether the SON report can be sent to the serving access network device, thereby improving efficiency of performing network performance optimization by using the SON report.

An embodiment of this application further provides a communication apparatus configured to implement any one of the foregoing methods, for example, provides a communication apparatus, including a unit (or means) configured to implement the steps performed by the terminal or the access network device in any one of the foregoing methods. For example, FIG. 7 is a diagram of a communication apparatus according to an embodiment of this application. The communication apparatus may be corresponding to a terminal, an access network device, or a core network device. In other words, the communication apparatus may be a module used for a terminal or an access network device, for example, a chip; or the communication apparatus is a terminal or an access network device. As shown in FIG. 7, the communication apparatus 700 includes a processing unit 710 and a transceiver unit 720.

In an implementation, when the communication apparatus is corresponding to a terminal, the communication apparatus may perform the steps performed by the terminal in the method in any one of the embodiments in FIG. 2 to FIG. 6, for example, the UE, the UE 1, or the UE 2. For example, the transceiver unit 720 is configured to receive measurement configurations from at least one access network device, where the measurement configurations are used for MDT measurement, and the measurement configurations include measurement range information of a first non-public network and/or a measurement configuration of an unlicensed band. The processing unit 710 is configured to perform MDT measurement based on the measurement configurations. Alternatively, in another example, the processing unit 710 is configured to: record a first report related to a first network; access a second cell in a second network; and determine whether to indicate that the first report exists to an access network device to which the second cell belongs. For more detailed descriptions of functions performed by the units of the communication apparatus, refer to the descriptions of the steps performed by the terminal in the foregoing method embodiments.

In an implementation, when the communication apparatus is corresponding to an access network device, the communication apparatus may perform the steps performed by the access network device in the method in any one of the embodiments in FIG. 2 to FIG. 6, for example, the first base station, the second base station, the gNB 1, or the gNB 2. For example, the transceiver unit 720 is configured to receive a measurement configuration from a core network device, where the measurement configuration is used for MDT measurement, and the measurement configuration includes measurement range information of a non-public network and/or a measurement configuration of an unlicensed band. The processing unit 710 is configured to indicate the transceiver unit 720 to send the measurement configuration to a terminal. For more detailed descriptions of functions performed by the units of the communication apparatus, refer to the descriptions of the steps performed by the access network device in the foregoing method embodiments.

In an implementation, when the communication apparatus is corresponding to a core network device, the communication apparatus may perform the steps performed by the core network device in the method in any one of the embodiments in FIG. 2 to FIG. 6, for example, the AMF or the MME. For example, the processing unit 710 is configured to determine a measurement configuration used for MDT, and the transceiver unit 720 is configured to send the measurement configuration to an access network device. For more detailed descriptions of functions performed by the units of the communication apparatus, refer to the descriptions of the steps performed by the core network device in the foregoing method embodiments.

It should be understood that division into units in the apparatus is merely logical function division. During actual implementation, all or some of the units may be integrated into one physical entity, or may be physically separated. For example, the transceiver unit 720 may be divided into a receiving unit and a sending unit. When the communication apparatus 700 is a communication apparatus on an access network side, the transceiver unit 720 may be further divided into a first transceiver unit communicating with the terminal and a second transceiver unit communicating with another network device like a base station or a core network device.

All the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element; or may be integrated into a chip of the apparatus. Alternatively, each unit may be stored in a memory in a form of a program, and a function of the unit is invoked and performed by a processing element of the apparatus. Moreover, all or some of the units may be integrated, or may be implemented independently. The processing element herein may also be referred to as a processor, and may be an integrated circuit having a signal processing capability. In an implementation process, each step in the foregoing methods or each unit may be implemented by an integrated logic circuit of hardware in the processor element, or may be implemented in a form of software invoked by the processing element.

In an example, a unit in any one of the foregoing apparatuses may be one or more integrated circuits configured to implement the foregoing methods, for example, one or more application-specific integrated circuits (Application-Specific Integrated Circuits, ASICs), one or more microprocessors (digital signal processors, DSPs), one or more field programmable gate arrays (Field Programmable Gate Arrays, FPGAs), or a combination of at least two types of these integrated circuits. For another example, when the units in the apparatus may be implemented in a form of scheduling a program by a processing element, the processing element may be a general-purpose processor, for example, a central processing unit (Central Processing Unit, CPU) or another processor that can invoke the program. For still another example, the modules may be integrated, and implemented in a form of a system-on-a-chip (system-on-a-chip, SoC).

The foregoing unit for receiving (for example, a communication unit) is an interface circuit of the apparatus, and is configured to receive a signal from another apparatus. For example, when the apparatus is implemented by using a chip, the receiving unit is an interface circuit that is of the chip and that is configured to receive a signal from another chip or apparatus. The foregoing unit for sending (for example, a sending unit or a communication unit) is an interface circuit of the apparatus, and is configured to send a signal to another apparatus. For example, when the apparatus is implemented by using a chip, the sending unit is an interface circuit that is of the chip and that is configured to send a signal to another chip or apparatus.

In another implementation, the communication apparatus provided in this embodiment of this application may include at least one processing element and an interface circuit. The at least one processing element is configured to perform any method provided in the foregoing method embodiments. The processing element may use a first manner, that is, invoking a program stored in a storage element, to perform some or all of the steps performed by the terminal or the network device; may use a second manner, that is, using an integrated logic circuit of hardware in the processor element in combination with instructions, to perform some or all of the steps performed by the terminal or the network device; or certainly may use a combination of the first manner and the second manner to perform some or all of the steps performed by the terminal, the access network device, or the core network device. It can be understood that the interface circuit may be a transceiver or an input/output interface. Optionally, the communication apparatus may further include a memory, configured to: store instructions executed by one of the foregoing processing elements, store input data needed for running instructions by the processing element, or store data generated after the processing element runs instructions.

As described above, the processing element herein may be a general-purpose processor, for example, a CPU, or may be one or more integrated circuits configured to implement the foregoing methods, for example, one or more ASICs, one or more microprocessors DSPs, one or more FPGAs, or a combination of at least two types of these integrated circuits. The storage element may be one memory, or may be a general term for a plurality of storage elements.

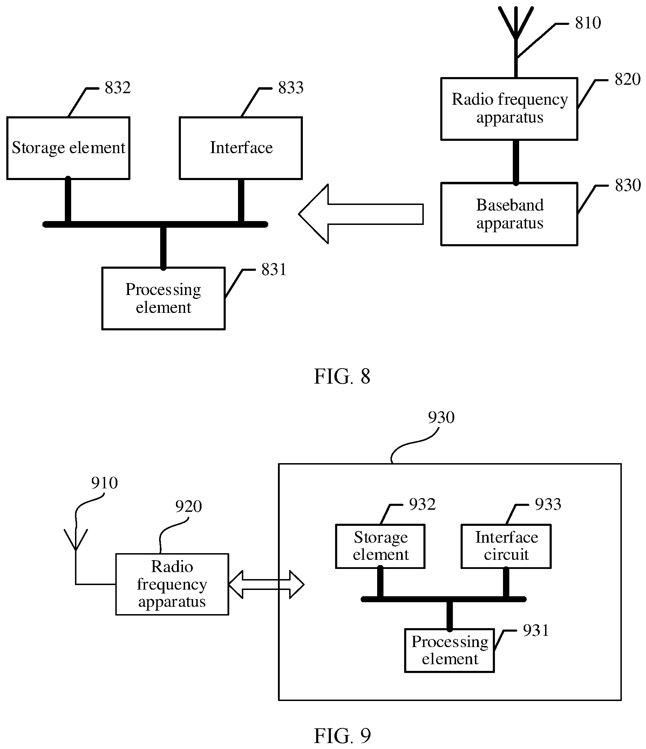

FIG. 8 is a diagram of a network device according to an embodiment of this application. The network device may be a base station or another access network device, and is configured to perform any one of the foregoing method embodiments, for example, the methods performed by the access network device in the embodiments shown in FIG. 2 to FIG. 6. As shown in FIG. 8, the network device includes an antenna 87, a radio frequency apparatus 820, and a baseband apparatus 830. The antenna 87 is connected to the radio frequency apparatus 820. In an uplink direction, the radio frequency apparatus 820 receives, through the antenna 87, information sent by a terminal; and sends, to the baseband apparatus 830 for processing, the information sent by the terminal. In a downlink direction, the baseband apparatus 830 processes information about the terminal, and sends processed information to the radio frequency apparatus 820. The radio frequency apparatus 820 processes the received information about the terminal, and then sends processed information to the terminal through the antenna 87.

The baseband apparatus 830 may include one or more processing elements 831, for example, include a main control CPU and another integrated circuit. In addition, the baseband apparatus 830 may further include a storage element 832 and an interface 833. The storage element 832 is configured to store a program and data. The interface 833 is configured to exchange information with the radio frequency apparatus 820. The interface is, for example, a common public radio interface (common public radio interface, CPRI). The foregoing apparatus used for the network device may be located in the baseband apparatus 830. For example, the foregoing apparatus used for the network device may be a chip on the baseband apparatus 830. The chip includes at least one processing element and an interface circuit. The processing element is configured to perform the steps performed by a receiving base station, a transmission node, or another access network device in any method provided in the foregoing method embodiments. The interface circuit is configured to communicate with another apparatus. In an implementation, the units that implement the steps in the foregoing methods in the network device may be implemented in a form of scheduling a program by a processing element. For example, the apparatus used for the network device includes a processing element and a storage element, and the processing element invokes a program stored in the storage element, to perform the method provided in any one of the foregoing method embodiments. The storage element may be a storage element on a same chip as the processing element, namely, an on-chip storage element, or may be a storage element on a different chip from the processing element, namely, an off-chip storage element.

FIG. 9 is a diagram of a structure of a terminal according to an embodiment of this application. The terminal is configured to implement any one of the foregoing method embodiments, for example, the methods performed by the terminal in FIG. 2 to FIG. 5. As shown in FIG. 9, the terminal includes an antenna 97, a radio frequency portion 920, and a signal processing portion 930. The antenna 97 is connected to the radio frequency portion 920. In a downlink direction, the radio frequency portion 920 receives, through the antenna 97, information sent by an access network device; and sends, to the signal processing portion 930 for processing, the information sent by the network device. In an uplink direction, the signal processing portion 930 processes information about the terminal, and sends processed information to the radio frequency portion 920. The radio frequency portion 920 processes the received information about the terminal, and then sends processed information to the access network device through the antenna 97.

The signal processing portion 930 is configured to process each communication protocol layer of data. The signal processing portion 930 may be a subsystem of the terminal. In this case, the terminal may further include other subsystems, for example, a central processing subsystem configured to process an operating system and an application layer of the terminal; and for another example, a peripheral subsystem configured to implement a connection to another device. The signal processing portion 930 may be a separately disposed chip. Optionally, the foregoing apparatus may be located in the signal processing portion 930.

The signal processing portion 930 may include one or more processing elements 931, for example, include a main control CPU and another integrated circuit. In addition, the signal processing portion 930 may further include a storage element 932 and an interface circuit 933. The storage element 932 is configured to store data and a program. The program used to perform methods performed by the terminal in the foregoing methods may be stored or may not be stored in the storage element 932, for example, stored in a memory outside the signal processing portion 930. During use, the signal processing portion 930 loads the program into a cache for use. The interface circuit 933 is configured to communicate with an apparatus. The foregoing apparatus may be located in the signal processing portion 930. The signal processing portion 930 may be implemented by using a chip. The chip includes at least one processing element and an interface circuit. The processing element is configured to perform the steps performed by the terminal in any method provided in the foregoing method embodiments. The interface circuit is configured to communicate with another apparatus. In an implementation, the units that implement the steps in the foregoing methods may be implemented in a form of scheduling a program by a processing element. For example, the apparatus includes a processing element and a storage element, and the processing element invokes a program stored in the storage element, to perform any method provided in the foregoing method embodiments. The storage element may be a storage element on a same chip as the processing element, namely, an on-chip storage element.

In another implementation, the program used to perform the foregoing methods performed by the terminal or the network device may be in a storage element on a different chip from the processing element, namely, an off-chip storage element. In this case, the processing element invokes a program from the off-chip storage element or loads a program to an on-chip storage element, to invoke and perform any method in the foregoing method embodiments.

In still another implementation, the units that implement the steps in the foregoing methods in the terminal or the network device may be configured as one or more processing elements. The processing element herein may be an integrated circuit, for example, one or more ASICs, one or more DSPs, one or more FPGAs, or a combination of these types of integrated circuits. These integrated circuits may be integrated to form a chip.

The units that implement the steps in the foregoing methods may be integrated, and implemented in a form of a system-on-a-chip (system-on-a-chip, SoC). The SoC chip is configured to implement the foregoing methods. At least one processing element and a storage element may be integrated into the chip, and the processing element invokes a program stored in the storage element to implement the foregoing methods performed by the terminal or the network device. Alternatively, at least one integrated circuit may be integrated into the chip, to implement the foregoing methods performed by the terminal or the network device. Alternatively, with reference to the foregoing implementations, functions of some units may be implemented by invoking a program by the processing element, and functions of some units may be implemented by the integrated circuit.

An embodiment of this application further provides a communication system, including at least one access network device and at least one core network device. Any one of the at least one access network device may perform the steps performed by the first base station, the gNB 1, the second base station, or the gNB 2 in any method provided in the foregoing method embodiments, and any one of the at least one core network device may perform the steps performed by the core network device, the AMF, or the MME in any method provided in the foregoing method embodiments.

In an implementation, the communication system further includes a terminal, and may perform the steps performed by the UE, the UE 1, or the UE 2 in any method provided in the foregoing method embodiments.

In an implementation, the communication system includes two or more access network devices. For example, the two or more access network devices may use a same radio access technology or different radio access technologies. For example, the two or more access network devices may be connected to a same core network or different core networks. In an example, the communication system includes a first access network device and a second access network device. The first access network device may perform the steps performed by the first base station or the gNB 1 in any method provided in the foregoing method embodiments, and the second access network device may perform the steps performed by the second base station or the gNB 2 in any method provided in the foregoing method embodiments.

In an implementation, the communication system includes two or more core network devices, and the two or more core network devices belong to different core networks. In an example, the communication system includes a first core network device and a second core network device. The first core network device may perform the steps performed by the AMF in the foregoing method embodiments, and the second core network device may perform the steps performed by the MME in the foregoing method embodiments.

A person of ordinary skill in the art can understand that all or some of the steps in the method embodiments may be implemented by a program instructing related hardware. The program may be stored in a computer-readable storage medium. When the program is run, the steps in the method embodiments are performed. The storage medium includes any medium that can store program code, like a ROM, a RAM, a magnetic disk, or an optical disc.

The protocol in this application may be a communication protocol or specification, for example, a 3GPP communication protocol.

It should be understood that in this specification, a term "and/or" is only an association relationship for describing associated objects, and represents that three relationships may exist. For example, A and/or B may represent the following three cases: Only A exists, both A and B exist, and only B exists. In addition, a symbol "/" in this application may represent "and/or". For example, A/B represents A and/or B.

It should be understood that in embodiments of the present invention, "B corresponding to A" indicates that B is associated with A, and B may be determined based on A. However, it should also be understood that determining B based on A does not mean that B is determined based only on A, and B may be alternatively determined based on A and/or other information.

In embodiments of this application, "a plurality of" means two or more.

Descriptions such as "first" and "second" in embodiments of this application are merely used for illustration and distinguishing between described objects, do not represent a sequence or indicate a special limitation on a quantity of described objects in embodiments of this application, and cannot constitute any limitation on embodiments of this application.

Unless otherwise specified, "transmission" (transmit/transmission) in embodiments of this application is bidirectional transmission, and includes a sending action and/or a receiving action. Specifically, "transmission" in embodiments of this application includes data sending, data receiving, or data sending and receiving. In other words, data transmission herein includes uplink and/or downlink data transmission. Data may include information and/or a signal. The uplink data transmission is transmission of uplink information and/or an uplink signal, and the downlink data transmission is transmission of downlink information and/or a downlink signal.

Mutual reference may be made to content in embodiments of this application. Unless otherwise specified or there is a logical conflict, terms and/or descriptions in different embodiments are consistent and may be mutually referenced, and technical features in different embodiments may be combined into a new embodiment based on an internal logical relationship between the technical features.

It can be understood that in embodiments of this application, the terminal and/or the network device may perform some or all of the steps in embodiment of this application. These steps or operations are merely examples. In embodiments of this application, other operations or variations of various operations may be further performed. In addition, the steps may be performed in different sequences presented in embodiments of this application, and not all the operations in embodiments of this application may need to be performed.

## Claims

1. A measurement configuration method, wherein the method is applied to an access network device, and the method comprises:
receiving a measurement configuration from a core network device, wherein the measurement configuration is used for minimization of drive tests MDT measurement, and the measurement configuration comprises measurement range information of a non-public network; and
sending the measurement configuration to a terminal.

2. The method according to claim 1, wherein the measurement range information comprises identification information of the non-public network, or comprises identification information of the non-public network and identification information of a public land mobile network PLMN corresponding to the non-public network.

3. The method according to claim 2, wherein the non-public network comprises a standalone non-public network SNPN, and the identification information of the non-public network comprises a network identifier NID of the SNPN.

4. The method according to claim 2 or 3, wherein the non-public network comprises a public network integrated non-public network PNI-NPN, and the identification information of the non-public network comprises identification information of a closed access group CAG to which a to-be-measured PNI-NPN cell belongs.

5. The method according to any one of claims 1 to 4, wherein the measurement range information further comprises neighboring cell measurement indication information, for indicating to measure a neighboring cell of a to-be-measured cell in the non-public network.

6. The method according to any one of claims 1 to 5, wherein the measurement configuration further comprises a measurement configuration of an unlicensed band, and the measurement configuration of the unlicensed band is used by the terminal to perform MDT measurement on a cell in an access network that uses the unlicensed band.

7. The method according to claim 6, wherein the measurement configuration of the unlicensed band comprises one or more of the following:
a frequency channel number of the unlicensed band, a channel bandwidth of the unlicensed band, or a to-be-measured item for the unlicensed band, wherein
the to-be-measured item comprises one or more of the following: a listen before talk LBT success rate for uplink data, average LBT duration for uplink data, average energy in the unlicensed band, or a to-be-measured LBT success rate for a random access channel.

8. The method according to claim 7, wherein when the MDT measurement is event-triggered MDT measurement, the measurement configuration of the unlicensed band further comprises a measurement event, and the measurement event comprises: the LBT success rate for the random access channel is lower than a first threshold, or the average energy measured in the unlicensed band is higher than a second threshold.

9. The method according to any one of claims 1 to 8, wherein the access network device is a serving access network device of the terminal, and the method further comprises:
receiving first indication information from the terminal, wherein the first indication information indicates whether there is a reportable measurement result for a specific network type.

10. The method according to any one of claims 1 to 9, wherein the access network device is the serving access network device of the terminal, and the method further comprises:
receiving second indication information from the terminal, wherein the second indication information indicates whether the terminal is capable of receiving an updated measurement configuration corresponding to the specific network type.

11. The method according to claim 9 or 10, wherein the specific network type comprises one or more of the following: the non-public network, a public network, and the access network that uses the unlicensed band.

12. The method according to any one of claims 1 to 11, wherein the terminal is handed over from the access network device to a target access network device, and the method further comprises:
sending, by the access network device, the measurement range information to the target access network device.

13. The method according to any one of claims 1 to 12, wherein the access network device is the serving access network device of the terminal, and the method further comprises:
receiving a measurement result for the non-public network; and
sending the measurement result to an access network device in the non-public network.

14. A measurement configuration method, wherein the method is applied to a terminal, and the method comprises:
receiving measurement configurations from at least one access network device, wherein the measurement configurations are used for minimization of drive tests MDT measurement, and the measurement configurations comprise measurement range information of a first non-public network; and
performing MDT measurement on one or more cells in the first non-public network based on the measurement configurations.

15. The method according to claim 14, wherein the measurement range information comprises identification information of the non-public network, or comprises identification information of the non-public network and identification information of a public land mobile network PLMN corresponding to the non-public network.

16. The method according to claim 15, wherein the non-public network comprises a standalone non-public network SNPN, and the identification information of the non-public network comprises a network identifier NID of the SNPN.

17. The method according to claim 15 or 16, wherein the non-public network comprises a public network integrated non-public network PNI-NPN, and the identification information of the non-public network comprises identification information of a closed access group CAG to which a to-be-measured PNI-NPN cell belongs.

18. The method according to any one of claims 14 to 17, wherein the measurement range information further comprises neighboring cell measurement indication information, for indicating to measure a neighboring cell of a to-be-measured cell in the non-public network.

19. The method according to any one of claims 14 to 18, wherein the measurement configurations further comprise a measurement configuration of an unlicensed band, and the measurement configuration of the unlicensed band is used by the terminal to perform MDT measurement on a cell in an access network that uses the unlicensed band.

20. The method according to claim 19, wherein the measurement configuration of the unlicensed band comprises one or more of the following:
a frequency channel number of the unlicensed band, a channel bandwidth of the unlicensed band, or a to-be-measured item for the unlicensed band, wherein
the to-be-measured item comprises one or more of the following: a listen before talk LBT success rate for uplink data, average LBT duration for uplink data, average energy in the unlicensed band, or a to-be-measured LBT success rate for a random access channel.

21. The method according to claim 20, wherein when the MDT measurement is event-triggered MDT measurement, the measurement configuration of the unlicensed band further comprises a measurement event, and the measurement event comprises: the LBT success rate for the random access channel is lower than a first threshold, or the average energy measured in the unlicensed band is higher than a second threshold.

22. The method according to any one of claims 14 to 21, wherein the measurement configurations comprise a first measurement configuration and a second measurement configuration, the first measurement configuration comprises the measurement range information of the first non-public network, and the second measurement configuration comprises a measurement configuration of a network different from the first non-public network.

23. The method according to claim 22, wherein the network different from the first non-public network comprises one or more of the following: a public network, the measurement configuration of the unlicensed band, and a second non-public network.

24. The method according to claim 22 or 23, wherein the method further comprises:
recording the first measurement configuration and the second measurement configuration in a same log or different logs.

25. The method according to claim 23, wherein the first measurement configuration comprises first measurement duration, the second measurement configuration comprises second measurement duration, and the method further comprises:
when a storage time of the first measurement configuration exceeds the first measurement duration, deleting the first measurement configuration; and/or
when a storage time of the second measurement configuration exceeds the second measurement duration, deleting the second measurement configuration.

26. The method according to any one of claims 22 to 25, wherein the method further comprises:
recording, in a same measurement report or different measurement reports, a first measurement result obtained based on the first measurement configuration and a second measurement result obtained based on the second measurement configuration.

27. The method according to any one of claims 14 to 26, wherein the method further comprises:
sending first indication information to a serving access network device of the terminal, wherein the first indication information indicates whether there is a reportable measurement result for a specific network type.

28. The method according to any one of claims 14 to 27, wherein the method further comprises:
sending second indication information to the serving access network device of the terminal, wherein the second indication information indicates whether the terminal is capable of receiving an updated measurement configuration corresponding to the specific network type.

29. The method according to claim 27 or 28, wherein the specific network type comprises one or more of the following: a non-public network, a public network, and the access network that uses the unlicensed band.

30. The method according to any one of claims 14 to 29, wherein the method further comprises:
determining whether the serving access network device of the terminal is an access network device in the first non-public network; and
when determining that the serving access network device is the access network device in the non-public network, sending the measurement result for the non-public network to the serving access network device.

31. A measurement configuration method, wherein the method is applied to a core network device and comprises:
determining a measurement configuration used for MDT, wherein the measurement configuration comprises measurement range information of a non-public network; and
sending the measurement configuration to an access network device.

32. The method according to claim 31, wherein when a terminal is handed over from the access network device to a target access network device, the method further comprises: receiving the measurement range information from the access network device, and sending the measurement range information to the target access network device.

33. The method according to claim 31 or 32, wherein the core network device comprises one or more core network elements.

34. The method according to any one of claims 31 to 33, wherein the MDT measurement comprises signaling based MDT measurement or management based MDT measurement.

35. The method according to any one of claims 31 to 34, wherein the measurement range information comprises identification information of the non-public network, or comprises identification information of the non-public network and identification information of a public land mobile network PLMN corresponding to the non-public network.

36. The method according to claim 35, wherein the non-public network comprises a standalone non-public network SNPN, and the identification information of the non-public network comprises a network identifier NID of the SNPN.

37. The method according to claim 35, wherein the non-public network comprises a public network integrated non-public network PNI-NPN, and the identification information of the non-public network comprises identification information of a closed access group CAG to which a to-be-measured PNI-NPN cell belongs.

38. The method according to any one of claims 35 to 37, wherein the measurement range information further comprises neighboring cell measurement indication information, for indicating to measure a neighboring cell of a to-be-measured cell in the non-public network.

39. The method according to claim 35, wherein the measurement configuration further comprises a measurement configuration of an unlicensed band, and the measurement configuration of the unlicensed band is used by the terminal to perform MDT measurement on a cell in an access network that uses the unlicensed band; and
the measurement configuration of the unlicensed band comprises one or more of the following: a frequency channel number of the unlicensed band, a channel bandwidth of the unlicensed band, or a to-be-measured item for the unlicensed band, wherein
the to-be-measured item comprises one or more of the following: a listen before talk LBT success rate for uplink data, average LBT duration for uplink data, average energy in the unlicensed band, or a to-be-measured LBT success rate for a random access channel.

40. A measurement configuration method, wherein the method comprises:
receiving measurement configurations from at least one access network device, wherein the measurement configurations are used for minimization of drive tests MDT measurement, and the measurement configurations comprise measurement configurations respectively corresponding to at least two networks; and
performing MDT measurement on a cell in at least one of the networks based on the measurement configurations.

41. The method according to claim 40, wherein the method further comprises: recording, in a same log or different logs, the measurement configurations respectively corresponding to the at least two networks.

42. The method according to claim 40 or 41, wherein a measurement configuration corresponding to each network comprises measurement duration, and the method further comprises: when a storage time of a measurement configuration corresponding to any network exceeds the measurement duration, deleting the measurement configuration corresponding to the network.

43. The method according to any one of claims 40 to 42, wherein when the measurement configurations respectively corresponding to the at least two networks are recorded in a same log, the method further comprises: when a storage time of any measurement configuration in the log exceeds preset duration, deleting all measurement configurations from the log.

44. The method according to any one of claims 40 to 43, wherein the measurement configurations respectively corresponding to the at least two networks comprise a first measurement configuration corresponding to a first network and a second measurement configuration corresponding to a second network, and the method further comprises: when receiving time of the second measurement configuration is later than that of the first measurement configuration, deleting the first measurement configuration stored in the first log, and storing the second measurement configuration in the first log.

45. The method according to claim 40, wherein the method further comprises: recording, in a same measurement report or different measurement reports, measurement results respectively obtained based on the measurement configurations corresponding to the at least two networks.

46. The method according to any one of claims 40 to 45, wherein the method further comprises: sending first indication information to a serving access network device of the terminal, wherein the first indication information indicates whether there is a reportable measurement result for a specific network type.

47. The method according to any one of claims 40 to 46, wherein the method further comprises: sending second indication information to the serving access network device of the terminal, wherein the second indication information indicates whether the terminal is capable of receiving an updated measurement configuration corresponding to the specific network type.

48. The method according to any one of claims 40 to 47, wherein the network comprises a non-public network, a public network, or an access network that uses an unlicensed band.

49. A measurement configuration method, wherein the method comprises:
receiving measurement configurations from at least one core network device, and sending the measurement configurations to a terminal, wherein the measurement configurations are used for MDT measurement, and the measurement configurations comprise measurement configurations respectively corresponding to at least two networks.

50. The method according to claim 49, wherein when the access network device is a serving device of the terminal, the method further comprises: receiving first indication information from the terminal, wherein the first indication information indicates whether there is a reportable measurement result for a specific network type.

51. The method according to claim 49, wherein when an access network device is a serving device of the terminal, the method further comprises: receiving second indication information from the terminal, wherein the second indication information indicates whether the terminal is capable of receiving an updated measurement configuration corresponding to a specific network type.

52. The method according to any one of claims 49 to 51, wherein the network comprises a non-public network, a public network, or an access network that uses an unlicensed band.

53. A measurement configuration method, wherein the method comprises:
receiving a measurement configuration from a core network device, wherein the measurement configuration is used for MDT measurement, and the measurement configuration comprises a measurement configuration of an unlicensed band; and sending the measurement configuration to a terminal, wherein the measurement configuration of the unlicensed band is used by the terminal to perform MDT measurement on a cell in an access network that uses the unlicensed band.

54. The method according to claim 53, wherein the measurement configuration of the unlicensed band comprises one or more of the following: a frequency channel number of the unlicensed band, a channel bandwidth of the unlicensed band, or a to-be-measured item for the unlicensed band, wherein the to-be-measured item comprises one or more of the following: an LBT success rate for uplink data, average LBT duration for uplink data, average energy in the unlicensed band, or a to-be-measured LBT success rate for a random access channel.

55. The method according to claim 53 or 54, wherein when the MDT measurement is event-triggered MDT measurement, the measurement configuration of the unlicensed band further comprises a measurement event, and the measurement event comprises: the LBT success rate for the random access channel is lower than a first threshold, or the average energy measured in the unlicensed band is higher than a second threshold.

56. A measurement configuration method, wherein the method comprises:
receiving a measurement configuration from an access network device, wherein the measurement configuration comprises a measurement configuration of an unlicensed band; and
performing, based on the measurement configuration, MDT measurement on a cell in an access network that uses the unlicensed band.

57. The method according to claim 56, wherein the measurement configuration of the unlicensed band comprises one or more of the following: a frequency channel number of the unlicensed band, a channel bandwidth of the unlicensed band, or a to-be-measured item for the unlicensed band, wherein the to-be-measured item comprises one or more of the following: an LBT success rate for uplink data, average LBT duration for uplink data, average energy in the unlicensed band, or a to-be-measured LBT success rate for a random access channel.

58. The method according to claim 56 or 57, wherein when the MDT measurement is event-triggered MDT measurement, the measurement configuration of the unlicensed band further comprises a measurement event, and the measurement event comprises: the LBT success rate for the random access channel is lower than a first threshold, or the average energy measured in the unlicensed band is higher than a second threshold.

59. A measurement configuration method, wherein the method comprises:
determining a measurement configuration used for MDT, wherein the measurement configuration comprises a measurement configuration of an unlicensed band; and
sending the measurement configuration to an access network device.

60. The method according to claim 59, wherein the measurement configuration of the unlicensed band comprises one or more of the following: a frequency channel number of the unlicensed band, a channel bandwidth of the unlicensed band, or a to-be-measured item for the unlicensed band, wherein the to-be-measured item comprises one or more of the following: an LBT success rate for uplink data, average LBT duration for uplink data, average energy in the unlicensed band, or a to-be-measured LBT success rate for a random access channel.

61. The method according to claim 59 or 60, wherein when the MDT measurement is event-triggered MDT measurement, the measurement configuration of the unlicensed band further comprises a measurement event, and the measurement event comprises: the LBT success rate for the random access channel is lower than a first threshold, or the average energy measured in the unlicensed band is higher than a second threshold.

62. An information recording method, comprising: recording, by a terminal, a first report related to a first network; accessing, by the terminal, a second cell in a second network; and determining, by the terminal, whether to indicate that the first report exists to an access network device to which the second cell belongs.

63. The method according to claim 62, wherein the first network or the second network comprises any one of the following: a public network, a non-public network, and an access network that uses an unlicensed band.

64. The method according to claim 62 or 63, wherein the first report comprises at least one of the following: a radio link failure report, a successful handover report, a random access report, a connection establishment failure report, a secondary-cell change failure report, a secondary-cell change success report, and an MDT report.

65. The method according to any one of claims 62 to 64, wherein the method further comprises: when the terminal determines to indicate that the first report exists to the access network device to which the second cell belongs, sending, by the terminal, indication information indicating that the first report exists to the access network device.

66. The method according to any one of claims 62 to 65, wherein the method further comprises: recording, by the terminal, network identification information corresponding to the first report.

67. The method according to claim 66, wherein the network identification information corresponding to the first report comprises a part or all of identification information of a subscribed network of the terminal.

68. The method according to claim 67, wherein when the first network is an SNPN, the network identification information corresponding to the first report comprises a PLMN identifier corresponding to the SNPN, or comprises a PLMN identifier and a NID that are corresponding to the SNPN.

69. The method according to claim 67, wherein when the first network is a PNI-NPN, the network identifier corresponding to the first report comprises a PLMN identifier corresponding to the PNI-NPN, or comprises a PLMN identifier corresponding to the PNI-NPN and an identifier of another PLMN to which the terminal subscribes, or comprises a PLMN identifier and CAG identification information that are corresponding to the PNI-NPN, or comprises a PLMN identifier corresponding to the PNI-NPN, an identifier of another PLMN to which the terminal subscribes, CAG identification information of the PNI-NPN, and CAG identification information of another PNI-NPN supported by a PLMN corresponding to the PNI-NPN.

70. The method according to any one of claims 62 to 69, wherein the determining, by the terminal, whether to indicate that the first report exists to an access network device to which the second cell belongs comprises: determining, by the terminal based on network identification information broadcast in the second cell and the network identification information corresponding to the first report, whether to indicate that the first report exists to the access network device to which the second cell belongs; and for example, if a part or all of the network identification information broadcast in the second cell belongs to the network identification information corresponding to the first report, determining, by the terminal, to send the indication information indicating that the first report exists to the access network device to which the second cell belongs.

71. The method according to any one of claims 62 to 70, wherein the method further comprises: receiving, by the terminal, feedback information of the indication information from the access network device, and sending, by the terminal, the first report to the access network device.

72. A communication apparatus, comprising a module or a unit configured to perform the method according to any one of claims 1 to 13.

73. A communication apparatus, comprising a module or a unit configured to perform the method according to any one of claims 14 to 30.

74. A communication apparatus, comprising a module or a unit configured to perform the method according to any one of claims 31 to 39.

75. A communication apparatus, comprising a module or a unit configured to perform the method according to any one of claims 40 to 48.

76. A communication apparatus, comprising a module or a unit configured to perform the method according to any one of claims 49 to 52.

77. A communication apparatus, comprising a module or a unit configured to perform the method according to any one of claims 53 to 55.

78. A communication apparatus, comprising a module or a unit configured to perform the method according to any one of claims 56 to 58.

79. A communication apparatus, comprising a module or a unit configured to perform the method according to any one of claims 59 to 71.

80. A communication apparatus, comprising a processor, configured to invoke a program stored in a memory, to perform the method according to any one of claims 1 to 71.

81. A computer-readable storage medium, wherein the computer-readable storage medium stores a computer program, and when the computer program is run by a communication apparatus, the communication apparatus is enabled to perform the method according to any one of claims 1 to 30.

82. A communication system, comprising a core network device and an access network device, wherein the access network device is configured to perform the method according to any one of claims 1 to 13, or the access network device is configured to perform the method according to any one of claims 49 to 13, or the access network device is configured to perform the method according to any one of claims 1 to 13; and the core network device is configured to perform the method according to any one of claims 53 to 55, or
the core network device is configured to perform the method according to any one of claims 31 to 39, or the core network device is configured to perform the method according to any one of claims 59 to 71.
